# EUROPEAN PATENT APPLICATION

(11) **EP 4 693 050 A1**
(43) Date of publication of application: **11.02.2026**
(21) Application number: 24869814.4
(22) Date of filing: 03.06.2024
(51) Int. Cl.: G06F 9/54

(54) **DATA SYNCHRONIZATION METHOD, ELECTRONIC DEVICE, AND COMPUTER-READABLE STORAGE MEDIUM**

(30) Priority: 27.09.2023 CN 202311289163
(71) Applicant: Huawei Technologies Co., Ltd., Shenzhen, Guangdong 518129 (CN)
(72) Inventor: WANG, Qiaosen, Shenzhen, Guangdong 518129 (CN); ZHOU, Feng, Shenzhen, Guangdong 518129 (CN); BAI, Yexin, Shenzhen, Guangdong 518129 (CN)
(74) Representative: Pfenning, Meinig & Partner mbB
(86) International application number: PCT/CN2024/097036
(87) International publication number: WO 2025/066252

(57) **Abstract**

This application provides a data synchronization method, and relates to the field of data communication technologies. A terminal device to which the method according to embodiments of this application is applied includes a first application and a second application. The first application does not have data access permission of a wearable device, and the second application has the data access permission of the wearable device. When a user performs a data synchronization operation on the first application, the first application may start the second application. After the second application starts, the second application may send a data synchronization request to a firmware program of the wearable device, to request the firmware program of the wearable device to synchronize data of the wearable device to the second application. Then, the second application synchronizes, to the first application, the data synchronized by the firmware program of the wearable device. In this way, the user only needs to perform the data synchronization operation once in the first application to synchronize the data of the wearable device to the first application. The operation is simple, and data synchronization efficiency is improved.

## Description

This application claims priority to Chinese Patent Application No. 202311289163.1, filed with the China National Intellectual Property Administration on September 27, 2023 and entitled "DATA SYNCHRONIZATION METHOD, ELECTRONIC DEVICE, AND COMPUTER-READABLE STORAGE MEDIUM", which is incorporated herein by reference in its entirety.

### TECHNICAL FIELD

This application relates to the field of data communication technologies, and in particular, to a data synchronization method, an electronic device, and a computer-readable storage medium.

### BACKGROUND

A wearable device such as a smartwatch or a smart band can be configured to display current time, and can also be configured to monitor exercise and health data of a user, for example, data such as running duration, a running distance, a heart rate, blood oxygen saturation, and sleep time, for the user to know exercise and health status of the user. The wearable device may be connected to a terminal device such as a mobile phone or a tablet computer, and synchronize data of the wearable device to the terminal device connected to the wearable device, so that the user can view the data of the wearable device on the terminal device.

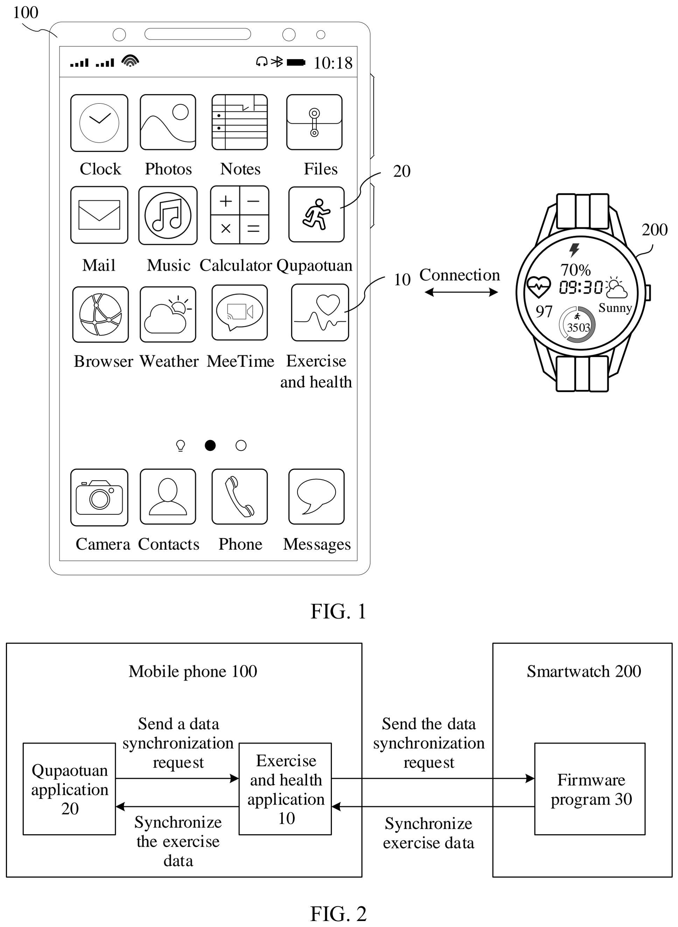

However, when the data of the wearable device is synchronized to some applications (for example, a Qupaotuan application^{®}) that are in the terminal device and that do not adapt to the wearable device, it is necessary for the user to perform a data synchronization operation for a plurality of times, to synchronize the data of the wearable device to the applications. For example, FIG. 1 is a diagram of a scenario in which data synchronization is performed between a mobile phone 100 and a smartwatch 200. As shown in FIG. 1, the mobile phone 100 includes an exercise and health application 10 and a Qupaotuan application^{®} 20, and the smartwatch 200 includes a firmware program 30 (not shown in the figure). The smartwatch 200 can synchronize data of the smartwatch 200 to the Qupaotuan application^{®} 20 on the mobile phone 100. As shown in FIG. 2, when a user wants to synchronize the data of the smartwatch 200 to the Qupaotuan application^{®} 20 on the mobile phone 100, the user needs to first perform a data synchronization operation in the exercise and health application 10 (the application that adapts to the smartwatch 200) on the mobile phone 100, to control the exercise and health application 10 on the mobile phone 100 to send a data synchronization request to the firmware program 30 of the smartwatch 200. After receiving the request, the smartwatch 200 may synchronize the data of the smartwatch 200 to the exercise and health application 10 on the mobile phone 100. Then, the user further needs to perform a data synchronization operation again in the Qupaotuan application^{®} 20 on the mobile phone 100, to control the Qupaotuan application^{®} 20 on the mobile phone 100 to send a data synchronization request to the exercise and health application 10 on the mobile phone 100, to request the exercise and health application 10 on the mobile phone 100 to resynchronize the data of the smartwatch 200 to the Qupaotuan application^{®} 20 on the mobile phone 100.

A procedure of the foregoing data synchronization manner is complex, and it is necessary for the user to perform the data synchronization operation for a plurality of times to synchronize the data of the wearable device to an application that does not adapt to the wearable device. The data synchronization has low efficiency and a complex operation.

### SUMMARY

Some implementations of this application provide a data synchronization method, an electronic device, and a computer-readable storage medium. The following describes this application from a plurality of aspects. Mutual reference may be made to implementations and beneficial effects of the plurality of aspects below.

According to a first aspect, this application provides a data synchronization method, including the following steps. A first application of a first electronic device receives a first instruction, where the first instruction indicates synchronization of first data of a second electronic device to the first application of the first electronic device; the first application of the first electronic device starts a second application of the first electronic device; and the second application of the first electronic device obtains the first data from the second electronic device, and synchronizes the first data to the first application of the first electronic device, where the first application does not have data access permission of the second electronic device, and the second application has the data access permission of the second electronic device.

The first electronic device may be a terminal device connected to a wearable device, such as a mobile phone, a notebook computer, a tablet computer, or a desktop computer. The second electronic device may be a wearable device such as a smartwatch, a sports watch, a band, smart glasses, or a smart helmet. The first application may be an application that does not adapt to a firmware program of a wearable device, such as a Qupaotuan application^{®}, WeChat^{®}, QQ^{®}, Keep^{®}, or Alipay^{®}. The second application may be an application that adapts to a firmware program of a wearable device, such as an exercise and health application, an exercise manager application^{®}, or a health manager application^{®}. The first data may be exercise and health data such as running duration, a running distance, a heart rate, blood oxygen saturation, and sleep time.

According to an implementation of this application, in a case that the first data of the second electronic device is synchronized to the first application on the first electronic device, the first application may start the second application when receiving a data synchronization instruction, and the second application obtains the first data from the second electronic device and synchronizes the data to the first electronic device. In this way, a user only needs to perform a data synchronization operation on the first application once to control the second application to synchronize the first data of the second electronic device to the first application, without performing the data synchronization operation on the second application, thereby reducing operation frequency of the user, and improving data synchronization efficiency.

In some implementations, that the first application of the first electronic device starts the second application of the first electronic device includes that: the first application opens a first interface of the second application based on a first link in the first application, where the first link is a link for opening the first interface of the second application.

The first link may be an interface link of the second application mentioned in this application, for example, an interface link of an activity interface of a Qupaotuan application^{®}.

An example in which the first application is a Qupaotuan application^{®}, the second application is an exercise and health application, and the first interface is a data synchronization interface of the exercise and health application is used. When a user clicks/taps a synchronization button on an activity interface of the Qupaotuan application^{®}, the Qupaotuan application^{®} may launch the data synchronization interface of the exercise and health application through a built-in interface link of the data synchronization interface of the exercise and health application to start the exercise and health application, and the data synchronization interface displays a data synchronization progress.

According to an implementation of this application, the first application of the first electronic device may open the first interface of the second application from an interface of the first application, and the first interface may display a data synchronization progress of the second application, so that the user can visually learn current data synchronization status.

In some implementations, that the first application of the first electronic device starts the second application of the first electronic device further includes that: the first application sends a second instruction to the second application, where the second instruction indicates the second application to start.

The second instruction may be a start instruction mentioned in this application.

According to an implementation of this application, after receiving a data synchronization instruction, the first application of the first electronic device may directly send the start instruction to the second application to start the second application. In addition, after the second application starts, the second application may execute a data synchronization task, without requiring the user to start and control the second application to execute the data synchronization task, thereby reducing user operations, and improving user experience.

In some implementations, that the first application of the first electronic device starts the second application of the first electronic device further includes that: the first application of the first electronic device pushes a first message to the second application of the first electronic device through a push server, where the first message is for notifying the second application to start.

The first message may be a data synchronization message pushed by the push server mentioned in this application to the second application of the first electronic device.

According to an implementation of this application, after receiving a data synchronization instruction, the first application of the first electronic device may push the data synchronization message to the second application of the first electronic device by using the push server, to notify the second application of the first electronic device to start to execute a data synchronization task. The second application is started through the push server, so that applicability is strong, improving flexibility of starting the second application.

In some implementations, that the first application of the first electronic device pushes the first message to the second application of the first electronic device through the push server includes that: the first application of the first electronic device sends a first request to the push server through a first application server, where the first request is for requesting the push server to push the first message to the second application of the first electronic device, where the first application server is associated with the first application of the first electronic device.

During specific implementation, the first application may be a Qupaotuan application^{®} mentioned in this application, the first application server may be a Qupaotuan cloud^{®} mentioned in this application, and the first request may be a data synchronization request sent by the Qupaotuan application^{®} to the Qupaotuan cloud^{®}.

In some implementations, that the second application of the first electronic device obtains the first data from the second electronic device, and synchronizes the first data to the first application of the first electronic device includes that: the second application of the first electronic device sends a second request to a firmware program of the second electronic device, where the second request is for requesting the firmware program of the second electronic device to synchronize the first data of the second electronic device to the second application of the first electronic device; and the second application of the first electronic device receives the first data synchronized by the firmware program of the second electronic device, and synchronizes the first data to the first application of the first electronic device.

The second request may be a data synchronization request sent by the second application of the first electronic device mentioned in this application to the firmware program of the second electronic device.

According to an implementation of this application, after the second application of the first electronic device starts, the second application may automatically synchronize the first data of the second electronic device to the first application of the first electronic device, without requiring the user to perform a data synchronization operation on the second application to control the second application to perform a data synchronization process, thereby reducing operation frequency of the user. In some implementations, that the second application of the first electronic device obtains the first data from the second electronic device, and synchronizes the first data to the first application of the first electronic device includes that: the second application of the first electronic device sends a second request to a firmware program of the second electronic device, where the second request is for requesting the firmware program of the second electronic device to synchronize the first data of the second electronic device to the second application of the first electronic device; and the second application of the first electronic device receives the first data synchronized by the firmware program of the second electronic device, and synchronizes the first data to the first application of the first electronic device.

During specific implementation, the second application may be an exercise and health application mentioned in this application, and a second application server may be an exercise and health cloud mentioned in this application.

In some implementations, the second application is further installable on a third electronic device, and the method further includes the following step: the first electronic device synchronizes the first data to the second application on the third electronic device through the second application server when an account that is the same as that of the second application on the first electronic device is used to log in to the second application on the third electronic device.

The third electronic device may be a terminal device on which the second application is installed, such as a notebook computer, a tablet computer, or a desktop computer.

An example in which the first electronic device is a mobile phone, the second electronic device is a smartwatch, the third electronic device is a notebook computer, the second application is an exercise and health application, and the second application server is an exercise and health cloud is used. The exercise and health application is installed on both the mobile phone and the notebook computer, and a same account is used to log in to the exercise and health application on both the mobile phone and the notebook computer. After the exercise and health application on the mobile phone synchronizes data of the smartwatch to the exercise and health cloud, the exercise and health cloud may synchronize the data to the notebook computer. In this way, the data of the smartwatch can be synchronized to a plurality of devices of the user at a time, without requiring the user to perform a data synchronization operation once on each device, thereby reducing user operations, and improving data synchronization efficiency.

According to a second aspect, an embodiment of this application provides a data synchronization method. The method includes the following steps.

A second application of a first electronic device starts based on a received second message, where the second message is pushed to the first electronic device by a push server notified by a second application server requested by a fourth electronic device, and the second application server is associated with the second application of the first electronic device; and the second application of the first electronic device obtains first data from a second electronic device, and synchronizes the first data to the fourth electronic device.

The first electronic device may be a terminal device connected to a wearable device, such as a mobile phone, a notebook computer, a tablet computer, or a desktop computer. The second electronic device may be a wearable device such as a smartwatch, a sports watch, a band, smart glasses, or a smart helmet. The fourth electronic device may be a head unit or another electronic device. The second application may be an application that adapts to a firmware program of a wearable device, such as an exercise and health application, an exercise manager application^{®}, or a health manager application^{®}. The first data may be exercise and health data such as running duration, a running distance, a heart rate, blood oxygen saturation, and sleep time. The second message may be a data synchronization message mentioned in this application. The second application server is a server that provides a data server for the second application.

An example in which the first electronic device is a mobile phone, the second electronic device is a smartwatch, the fourth electronic device is a head unit, the second application is an exercise and health application, and the second application server is an exercise and health cloud is used. After a head unit system of the head unit starts, the head unit system may call a data synchronization interface of the exercise and health cloud to send a data synchronization request to the exercise and health cloud. After receiving the data synchronization request sent by the head unit, the exercise and health cloud may call a push service interface of the push server and send a data push data synchronization request to the push server, to request the push server to push a data synchronization message to the exercise and health application on the mobile phone. After receiving the data synchronization message pushed by the push server, the exercise and health application on the mobile phone may obtain data such as running duration, a running distance, a heart rate, and blood oxygen saturation in the smartwatch, and synchronize the data to the head unit.

According to an implementation of this application, the fourth electronic device may directly start the second application on the first electronic device through the push server, and then the second application of the first electronic device obtains the first data of the second electronic device and synchronizes the first data to the fourth electronic device. In this way, the user does not need to manually start the second application and perform a data synchronization operation in the second application, reducing user operations, and improving data synchronization efficiency.

In some embodiments, that the second application of the first electronic device obtains the first data from the second electronic device, and synchronizes the first data to the fourth electronic device includes that: the second application of the first electronic device sends a second request to a firmware program of the second electronic device, where the second request is for requesting the firmware program of the second electronic device to synchronize the first data of the second electronic device to the second application of the first electronic device; and the second application of the first electronic device synchronizes the first data of the second electronic device to the fourth electronic device through the second application server.

The second request may be a data synchronization request sent by the second application of the first electronic device to the firmware program of the second electronic device.

An example in which the first electronic device is a mobile phone, the second electronic device is a smartwatch, the fourth electronic device is a head unit, the second application is an exercise and health application, and the second application server is an exercise and health cloud is still used. When the exercise and health application on the mobile phone receives a data synchronization message pushed by the push server, if the exercise and health application supports silent message pushing, that is, the exercise and health application can directly perform a corresponding action in response to a message pushed by the push server, after the exercise and health application starts, the exercise and health application may directly send a data synchronization request to a firmware program of the smartwatch in response to the data synchronization message, to request the firmware program of the smartwatch to synchronize data of the smartwatch to the exercise and health application on the mobile phone. After receiving the data synchronized by the firmware program of the smartwatch, the exercise and health application on the mobile phone may synchronize the data to the exercise and health cloud, and then the exercise and health cloud synchronizes the data to the head unit.

According to an implementation of this application, in a case that the second application of the first electronic device supports silent message pushing, that is, in a case that the second application of the first electronic device can directly perform a data synchronization action in response to a data synchronization message pushed by the push server, the user does not need to perform a data synchronization operation on the second application of the first electronic device to automatically synchronize the first data of the first electronic device to the fourth electronic device through the first application of the first electronic device, implementing data synchronization that is not perceived by the user, and improving data synchronization efficiency.

In some embodiments, that the second application of the first electronic device sends the second request to the firmware program of the second electronic device includes that: the second application of the first electronic device displays a first component on a display of the first electronic device, where the first component includes prompt information for prompting synchronization of the first data of the second electronic device to the fourth electronic device; the second application of the first electronic device receives a first operation for the first component, where the first operation is for synchronizing the first data of the second electronic device to the fourth electronic device; and the second application of the first electronic device sends the second request to the firmware program of the second electronic device in response to the first operation.

The first component may be an interactive component such as a pop-up window, a button, or a text box. The first operation may be a click/tap operation, a touch and hold operation, a left slide operation, a right slide operation, or the like.

An example in which the first electronic device is a mobile phone, the second electronic device is a smartwatch, the fourth electronic device is a head unit, the second application is an exercise and health application, and the second application server is an exercise and health cloud is still used. After the exercise and health application on the mobile phone receives a data synchronization message pushed by the push server, if the exercise and health application does not support silent message pushing, that is, the exercise and health application cannot directly perform a corresponding action in response to a pushed message, the exercise and health application may display a corresponding pop-up window on a desktop of a display of the mobile phone. The pop-up window includes prompt information for prompting the user to perform a data synchronization operation, for example, "data synchronization reminder: your exercise and health data has not been synchronized, please synchronize". When the user taps the pop-up window, the mobile phone can directly jump to a data synchronization interface of the exercise and health application. Then, the exercise and health application may send a data synchronization request to a firmware program of the smartwatch, to request the firmware program of the smartwatch to synchronize data to the exercise and health application. When the firmware program of the smartwatch synchronizes the data to the exercise and health application on the mobile phone, the data synchronization interface may further display a data synchronization progress. It needs to be noted that the user may alternatively perform a touch and hold operation, a left slide operation, a right slide operation, or another operation on the pop-up window of the exercise and health application, to control the mobile phone to jump to the data synchronization interface of the exercise and health application.

According to an implementation of this application, in a case that the second application of the first electronic device does not support silent message pushing, that is, in a case that the second application of the first electronic device cannot directly perform a data synchronization action in response to a data synchronization message pushed by the push server, the user only needs to trigger the first component to synchronize the first data of the first electronic device to the fourth electronic device through the first application of the first electronic device, so that the operation is simple, improving data synchronization efficiency. In some embodiments, that the second application of the first electronic device synchronizes the first data of the second electronic device to the fourth electronic device through the second application server includes that: the second application of the first electronic synchronizes the first data of the second electronic device to the second application server; the second application server receives a third request sent by the fourth electronic device; and the second application server synchronizes the first data of the second electronic device to the fourth electronic device in response to the third request.

The third request may be a data synchronization request sent by the fourth electronic device to the second application server.

An example in which the first electronic device is a mobile phone, the second electronic device is a smartwatch, the fourth electronic device is a head unit, the second application is an exercise and health application, and the second application server is an exercise and health cloud is still used. After the second application on the mobile phone synchronizes data of the smartwatch to the exercise and health cloud, a head unit system of the head unit may actively send a data synchronization request to the exercise and health cloud, to request the exercise and health cloud to synchronize the data of the smartwatch to the head unit. In this way, the head unit system of the head unit can actively synchronize the data of the smartwatch from the exercise and health cloud.

In some embodiments, that the second application server receives the third request sent by the fourth electronic device includes that: the fourth electronic device obtains data synchronization start time of the first data and latest data synchronization completion time of the second application server; and the fourth electronic device sends the third request to the second application server based on determining that the latest data synchronization completion time is greater than the data synchronization start time, for the second application server to receive the third request.

An example in which the first electronic device is a mobile phone, the second electronic device is a smartwatch, the fourth electronic device is a head unit, the second application is an exercise and health application, and the second application server is an exercise and health cloud is still used. When the exercise and health cloud receives a data synchronization request sent by a head unit system of the head unit, the exercise and health cloud may send data synchronization start time to the head unit system of the head unit, so that the head unit system of the head unit obtains the data synchronization start time. When synchronization of data of the smartwatch to the exercise and health application on the mobile phone is completed, the exercise and health application on the mobile phone records data synchronization completion time, and synchronizes the data synchronization completion time to the exercise and health cloud. Then, the head unit system of the head unit may query the data synchronization completion time, that is, the latest data synchronization completion time, from the exercise and health cloud, and then determine whether the latest data synchronization completion time is greater than the data synchronization start time. If the latest data synchronization completion time is greater than the data synchronization start time, the exercise and health application on the mobile phone has synchronized the data of the smartwatch to the exercise and health cloud. If the latest data synchronization completion time is not greater than the data synchronization start time, the exercise and health application on the mobile phone has not synchronized the data of the smartwatch to the exercise and health cloud, and the head unit system needs to continue to wait for specified duration.

In some cases, when an abnormal situation occurs during data synchronization, to avoid indefinite waiting of the head unit system, a maximum quantity of times for which the head unit system performs a waiting process may be set, for example, three times. When a quantity of times for which the head unit system performs the waiting process reaches the maximum quantity of times, a data synchronization task ends.

According to an implementation of this application, when the second application on the first electronic device has synchronized the data of the second electronic device to the second application server, the fourth electronic device may request the second application server to synchronize the first data of the second electronic device. In this way, the fourth electronic device can be prevented from frequently sending the data synchronization request to the second application server, thereby reducing power consumption of the fourth electronic device.

In some embodiments, that the second application server receives the third request sent by the fourth electronic device includes that: the second application server receives the first data that is of the second electronic device and that is synchronized by the second application of the first electronic device, and sends a third message to the fourth electronic device; and the fourth electronic device receives the third message, and sends the third request to the second application, for the second application server to receive the third request.

An example in which the first electronic device is a mobile phone, the second electronic device is a smartwatch, the fourth electronic device is a head unit, the second application is an exercise and health application, and the second application server is an exercise and health cloud is still used. When the exercise and health application on the mobile phone synchronizes data of the smartwatch to the exercise and health cloud and the synchronization is completed, the exercise and health cloud may actively notify a head unit system of the head unit that the data synchronization has been completed. After receiving the notification, the head unit system may directly request the exercise and health cloud to synchronize the data of the smartwatch, without performing a determining action of completion of data synchronization, thereby reducing power consumption of the head unit system.

According to a third aspect, an implementation of this application provides an electronic device, including: a memory, configured to store instructions for execution by one or more processors of the electronic device; and the processor, where when the processor executes the instructions in the memory, the electronic device is enabled to perform the method according to any implementation of the first aspect of this application. For beneficial effects that can be achieved in the third aspect, refer to beneficial effects of the method provided in any implementation of the first aspect. Details are not described herein again.

According to a fourth aspect, an implementation of this application provides a computer-readable storage medium. The computer-readable storage medium stores instructions, and when the instructions are executed on a computer, the computer is enabled to perform the method according to any implementation of the first aspect. For beneficial effects that can be achieved in the fourth aspect, refer to beneficial effects of the method provided in any implementation of the first aspect. Details are not described herein again.

According to a fifth aspect, an implementation of this application provides a chip. A system on chip includes a processing circuit and a storage medium, the storage medium stores computer program code, and when the computer program code is executed by the processing circuit, the method according to any embodiment of the first aspect is implemented. For beneficial effects that can be achieved in the fifth aspect, refer to beneficial effects of the method provided in any embodiment of the first aspect. Details are not described herein again.

According to a sixth aspect, an embodiment of this application provides a computer program product, including a computer program/instructions. When the computer program/instructions are executed, a computer is enabled to perform the method according to any embodiment of the first aspect. For beneficial effects that can be achieved in the sixth aspect, refer to beneficial effects of the method provided in any embodiment of the first aspect. Details are not described herein again.

### BRIEF DESCRIPTION OF DRAWINGS

FIG. 1 is a diagram of a scenario in which data synchronization is performed between a mobile phone and a smartwatch;
FIG. 2 is a diagram of a principle of performing data synchronization between a mobile phone and a smartwatch;
FIG. 3 is a diagram of an example of a data synchronization operation of an application health application;
FIG. 4 is a diagram of an example of a data synchronization operation of a Qupaotuan application^{®};
FIG. 5 is a diagram of an example of a data synchronization interface that is of an application health application and that is displayed on an activity interface of a Qupaotuan application^{®} according to an embodiment of this application;
FIG. 6 is a flowchart 1 of an example of a data synchronization method according to some embodiments;
FIG. 7A, FIG. 7B, FIG. 7C, and FIG. 7D are a diagram 1 of an example of a scenario of a data synchronization operation according to an embodiment of this application;
FIG. 8A, FIG. 8B, FIG. 8C, and FIG. 8D are a diagram 2 of an example of a scenario of a data synchronization operation according to an embodiment of this application;
FIG. 9 is a flowchart 2 of an example of a data synchronization method according to an embodiment of this application;
FIG. 10A, FIG. 10B, FIG. 10C, and FIG. 10D are a diagram 3 of an example of a scenario of a data synchronization operation according to an embodiment of this application;
FIG. 11A and FIG. 11B are a diagram of an example of a check-in scenario of a Qupaotuan application^{®} according to an embodiment of this application;
FIG. 12 is a diagram of an example of a structure of a data synchronization system according to an embodiment of this application;
FIG. 13A is a diagram 1 of an example of a principle of data synchronization according to an embodiment of this application;
FIG. 13B is a diagram 2 of an example of a principle of data synchronization according to an embodiment of this application;
FIG. 14A is a flowchart 3 of an example of a data synchronization method according to an embodiment of this application;
FIG. 14B is a flowchart 4 of an example of a data synchronization method according to an embodiment of this application;
FIG. 15 is a flowchart 4 of an example of a data synchronization method according to some embodiments;
FIG. 16 is a diagram of an example of an interface of a head unit system according to an embodiment of this application;
FIG. 17 is a flowchart 5 of an example of a data synchronization method according to an embodiment of this application;
FIG. 18A and FIG. 18B are a diagram 4 of an example of a scenario of a data synchronization operation according to an embodiment of this application;
FIG. 19A and FIG. 19B are a flowchart 6 of an example of a data synchronization method according to an embodiment of this application;
FIG. 20 is a flowchart 6 of an example of a data synchronization method according to an embodiment of this application; and
FIG. 21 is a block diagram of an electronic device according to an embodiment of this application.

### DESCRIPTION OF EMBODIMENTS

Implementations of this application are for providing a data synchronization method. According to the method provided in this application, data synchronization operations of a user can be reduced, facilitating synchronization performed on data by the user, thereby improving data synchronization efficiency and user operation experience.

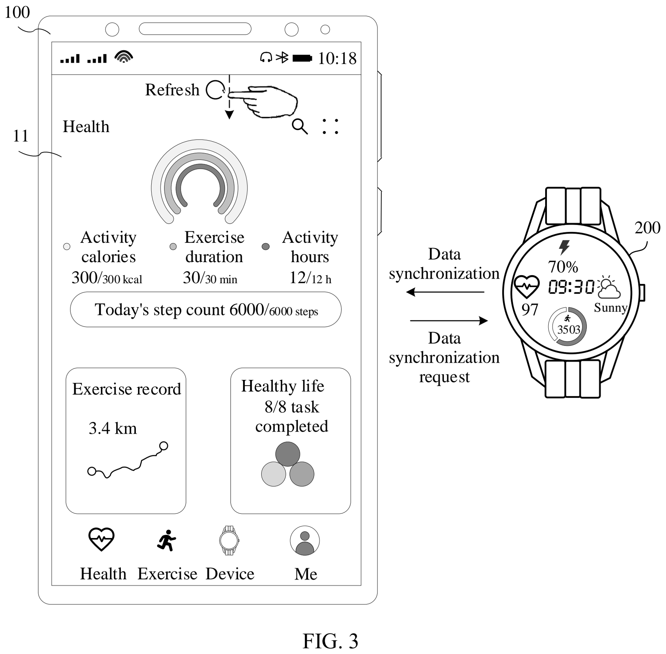

As described above, when a smartwatch 200 synchronizes data to a Qupaotuan application^{®} 20 on a mobile phone 100, there are problems of low data synchronization efficiency and a complex operation. As shown in FIG. 3, when a user wants to synchronize data (for example, exercise and health data such as running duration, a running distance, a heart rate, blood oxygen saturation, and sleep time) of a smartwatch 200 to a Qupaotuan application^{®} 20 on a mobile phone 100, the user needs to first open an exercise and health application 10 on the mobile phone 100, and then perform a pull-to-refresh operation on an initial interface: a health interface 11 of the exercise and health application 10, for example, slide down from an upper edge of the health interface 11 with a finger. When detecting the pull-to-refresh operation, the exercise and health application 10 on the mobile phone 100 may send a data synchronization request to a firmware program 30 of the smartwatch 200, to request the firmware program 30 of the smartwatch 200 to synchronize data of the smartwatch 200 to the exercise and health application 10 on the mobile phone 100.

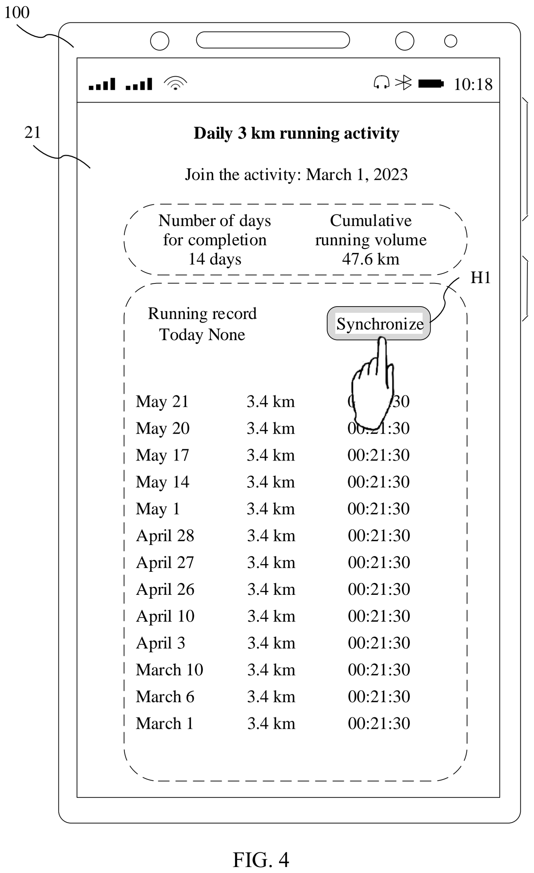

As shown in FIG. 4, after the firmware program 30 of the smartwatch 200 synchronizes the data of the smartwatch 200 to the exercise and health application 10 on the mobile phone 100, the user may open an activity interface 21 of the Qupaotuan application^{®} 20 on the mobile phone 100, and then tap a data synchronization button H1 in the activity interface 21. When detecting that the data synchronization button H1 is tapped, the Qupaotuan application^{®} 20 on the mobile phone 100 sends a data synchronization request to the exercise and health application 10 on the mobile phone 100. After receiving the request, the exercise and health application 10 on the mobile phone 100 may resynchronize, to the Qupaotuan application^{®} 20 on the mobile phone 100, the data synchronized by the firmware program 30 of the smartwatch 200 to the exercise and health application 10 on the mobile phone 100. After the exercise and health application 10 on the mobile phone 100 synchronizes the data of the smartwatch 200 to the Qupaotuan application^{®} 20 on the mobile phone 100, the Qupaotuan application^{®} 20 may provide some services for the user based on the data. For example, when the exercise and health application 10 on the mobile phone 100 synchronizes running data of the smartwatch 200 to the Qupaotuan application^{®} 20 on the mobile phone 100, the Qupaotuan application^{®} 20 on the mobile phone 100 may complete a daily running check-in activity based on the running data.

It can be learned from the scenarios described in FIG. 3 and FIG. 4 that, the user needs to perform a data synchronization operation twice to synchronize the data of the smartwatch 200 to the Qupaotuan application^{®} 20 on the mobile phone 100, resulting in a complex operation process and low data synchronization efficiency.

To resolve the foregoing technical problem, this application provides a data synchronization method. In the method provided in embodiments of this application, a terminal device (for example, a mobile phone) includes a first application (for example, a Qupaotuan application^{®}) and a second application (for example, an exercise and health application). The first application is an application that does not adapt to a firmware program 30 of a wearable device (for example, a smartwatch), and the second application is an application that has adapted to the firmware program of the wearable device. When the first application receives a data synchronization instruction, the first application may start the second application. After the second application starts, the second application may send a data synchronization request to a firmware program of the wearable device, to request the firmware program of the wearable device to synchronize data of the wearable device to the second application. Then, the second application synchronizes, to the first application, the data synchronized by the firmware program of the wearable device to the second application. In this way, the user only needs to perform the data synchronization operation once in the first application to synchronize the data of the wearable device to the first application. The data synchronization operation is simple, and data synchronization efficiency can be improved.

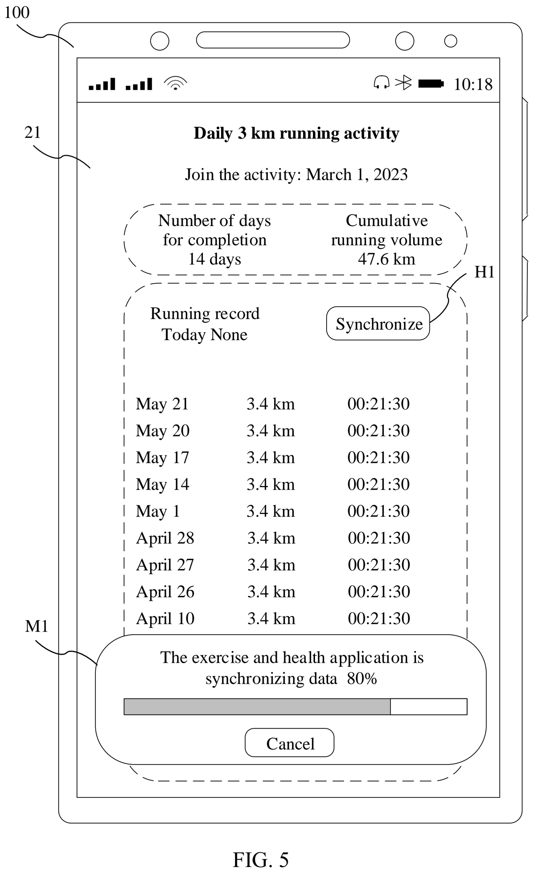

For example, refer to FIG. 5. When the user opens an activity interface 21 of the Qupaotuan application^{®} 20 (as an example of the first application) on the mobile phone 100 and taps a synchronization button H1 in the activity interface 21, the Qupaotuan application^{®} 20 may launch a data synchronization interface M1 of the exercise and health application 10 (as an example of the second application) on the mobile phone 100. When the data synchronization interface M1 of the exercise and health application 10 is launched, the exercise and health application 10 starts. After the exercise and health application 10 on the mobile phone 100 starts, the exercise and health application 10 on the mobile phone 100 may send a data synchronization request to the firmware program 30 of the smartwatch 200, to request the firmware program 30 of the smartwatch 200 to synchronize data of the smartwatch 200 to the exercise and health application 10 on the mobile phone 100. Then, the exercise and health application 10 on the mobile phone 100 synchronizes the data to the Qupaotuan application^{®} 20 on the mobile phone 100. During data synchronization performed by the exercise and health application 10 on the mobile phone 100, the data synchronization interface M1 of the exercise and health application 10 may display a data synchronization progress of the exercise and health application 10. As shown in FIG. 5, the data synchronization interface M1 displays a current data synchronization progress of the exercise and health application 10 being 80%.

It may be understood that, in the foregoing description, the smartwatch is merely used as an example of the wearable device, the mobile phone is merely used as an example of the terminal device connected to the wearable device, the Qupaotuan application^{®} is merely used as an example of the first application, and the exercise and health application is merely used as an example of the second application. The smartwatch may alternatively be another wearable device such as a sports watch, a band, smart glasses, or a smart helmet.

It may be understood that the mobile phone may alternatively be another terminal device connected to the smartwatch, such as a notebook computer, a tablet computer, or a desktop computer. The Qupaotuan application^{®} may alternatively be an application that does not adapt to a firmware program of a wearable device, such as WeChat^{®}, QQ^{®}, Keep^{®}, or Alipay^{®}. The exercise and health application may alternatively be an application that adapts to a firmware program of a wearable device, such as an exercise manager application^{®} or a health manager application^{®}.

For ease of understanding, before the data synchronization method provided in embodiments of this application is described, a specific procedure of the data synchronization manner in FIG. 1 to FIG. 4 is first described by using the mobile phone 100 as the terminal device, using the smartwatch 200 as an example of the wearable device, using the Qupaotuan application^{®} 20 as an example of the first application, and using the exercise and health application 10 as an example of the second application.

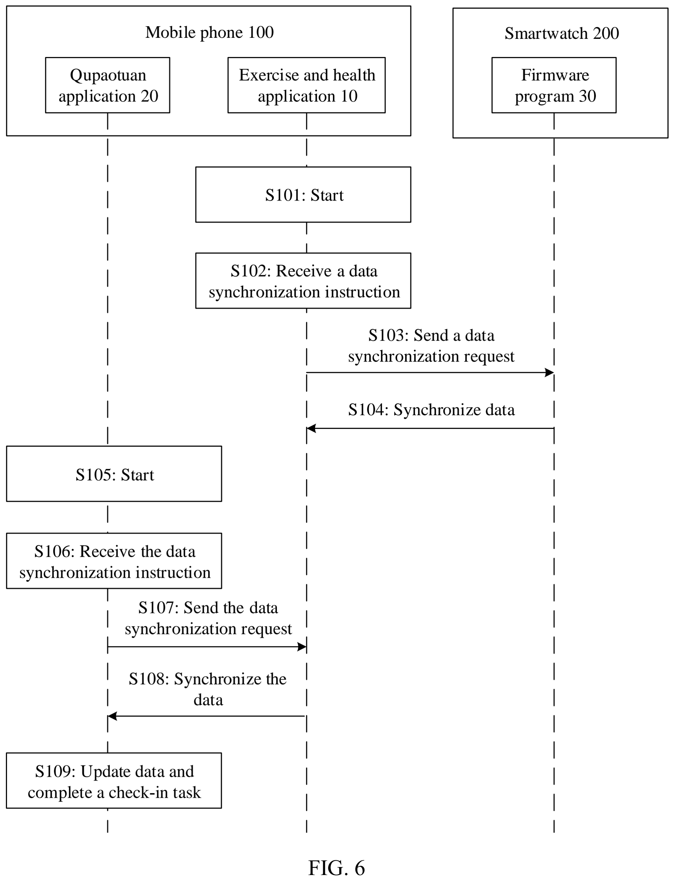

As shown in FIG. 6, a data synchronization procedure between the Qupaotuan application^{®} 20 on the mobile phone 100 and the firmware program 30 of the smartwatch 200 includes the following steps.

S101: Start the exercise and health application 10 on the mobile phone 100.

In an embodiment of this application, the exercise and health application 10 has adapted to the firmware program 30 of the smartwatch 200, has data access permission of the smartwatch 200, and can perform data interaction with the firmware program 30 of the smartwatch 200. The Qupaotuan application^{®} 20 does not adapt to the firmware program of the smartwatch 200, does not have the data access permission of the smartwatch 200, and cannot perform data interaction with the firmware program 30 of the smartwatch 200.

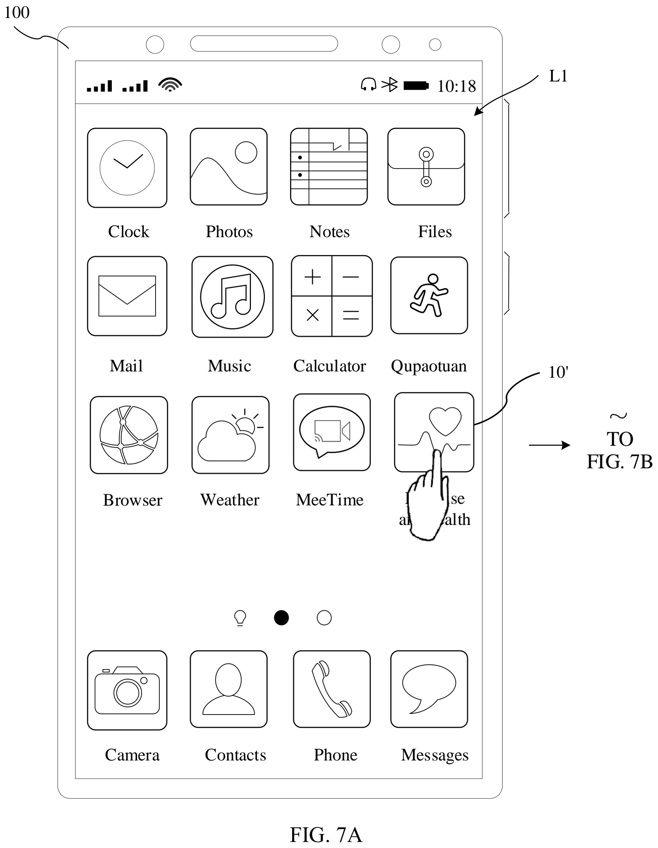

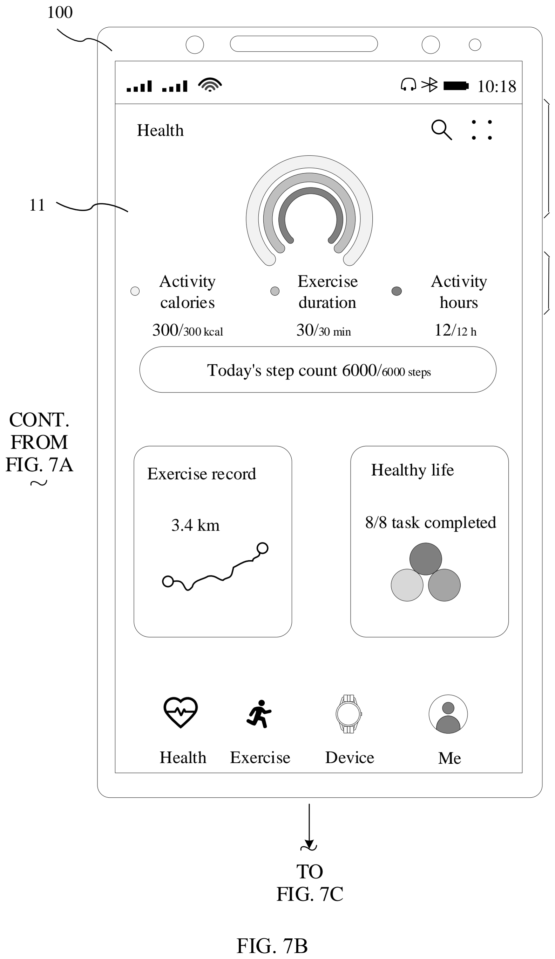

For example, as shown in FIG. 7A and FIG. 7B, when the user taps an icon 10' of the exercise and health application 10 on a desktop L1 of the mobile phone 100, the exercise and health application 10 starts. After the exercise and health application 10 starts, a health interface 11 is entered.

S102: The exercise and health application 10 on the mobile phone 100 receives a data synchronization instruction.

In an embodiment of this application, the data synchronization instruction may include a data synchronization operation instruction, a data synchronization voice instruction, and another instruction.

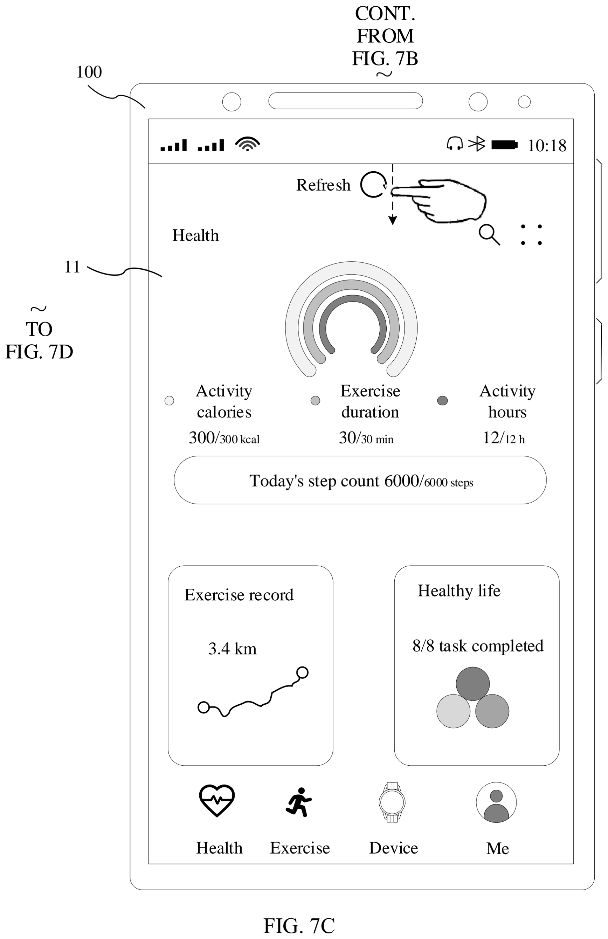

For example, as shown in FIG. 7C, after the exercise and health application 10 on the mobile phone 100 starts and the health interface 11 opens, when the user performs a data synchronization operation on the health interface 11, for example, pulls down the health interface 11 for refreshing, the exercise and health application 10 may receive a data synchronization operation instruction corresponding to the data synchronization operation.

In another example, after the exercise and health application 10 on the mobile phone 100 starts, when the user says "synchronize data of the smartwatch to the Qupaotuan application^{®}" or provides another data synchronization voice instruction, the exercise and health application 10 may receive the data synchronization voice instruction.

S103: The exercise and health application 10 on the mobile phone 100 sends a data synchronization request to the firmware program 30 of the smartwatch 200.

In some embodiments, a communication connection may be established between the mobile phone 100 and the smartwatch 200 by using a communication technique such as Bluetooth or a wireless fidelity (wireless fidelity, Wi-Fi) technique, so that mutual data transmission can be performed between the mobile phone 100 and the smartwatch 200.

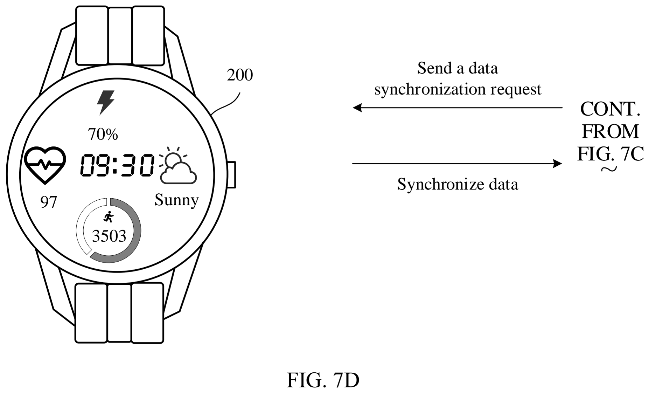

After receiving the data synchronization instruction, the exercise and health application 10 on the mobile phone 100 may send the data synchronization request to the firmware program 30 of the smartwatch 200. For example, as shown in FIG. 7C and FIG. 7D, when the user pulls down the health interface 11 of the exercise and health application 10 for refreshing, the exercise and health application 10 on the mobile phone 100 sends the data synchronization request to the firmware program 30 of the smartwatch 200 in response to the operation.

S104: The firmware program 30 of the smartwatch 200 synchronizes data to the exercise and health application 10 on the mobile phone 100.

For example, as shown in FIG. 7D, after the firmware program 30 of the smartwatch 200 receives the data synchronization request sent by the exercise and health application 10 on the mobile phone 100, the firmware program 30 of the smartwatch 200 may synchronize the data (for example, data such as running duration, a running distance, a heart rate, blood oxygen saturation, and sleep time) of the smartwatch 200 to the exercise and health application 10 on the mobile phone 100.

S105: Start the Qupaotuan application^{®} 20 on the mobile phone 100.

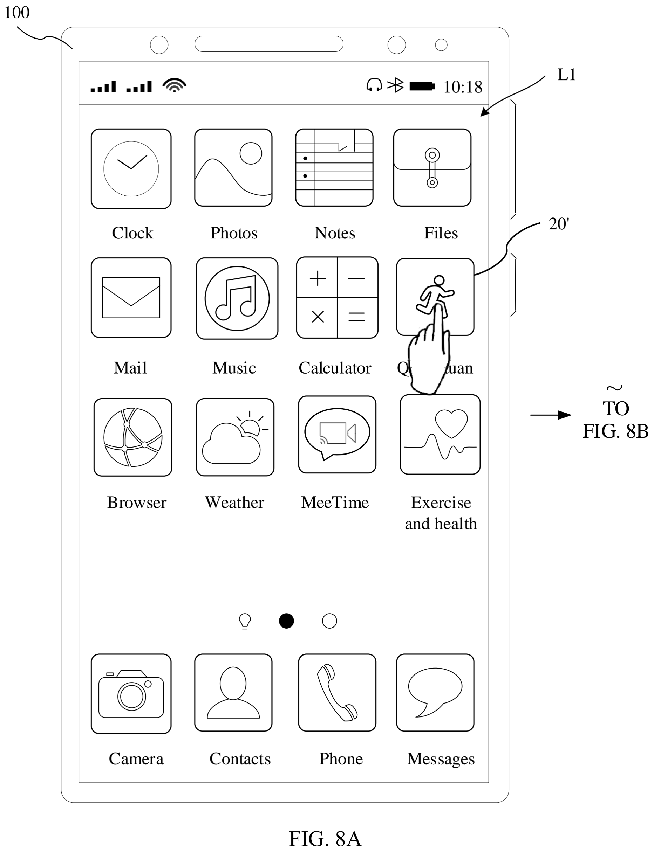

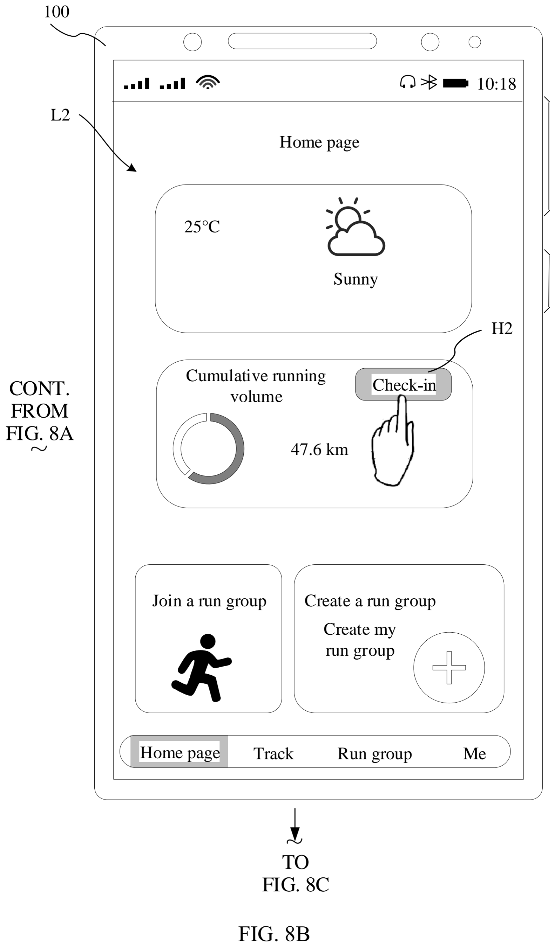

For example, as shown in FIG. 8A and FIG. 8B, when the user taps an icon 20' of the Qupaotuan application^{®} 20 on the desktop L1 of the mobile phone 100, the Qupaotuan application^{®} 20 on the mobile phone 100 starts, and a home page interface L2 is displayed.

S106: The Qupaotuan application^{®} 20 on the mobile phone 100 receives a data synchronization instruction.

In an embodiment of this application, the data synchronization instruction includes a data synchronization operation instruction, a data synchronization voice instruction, and another instruction.

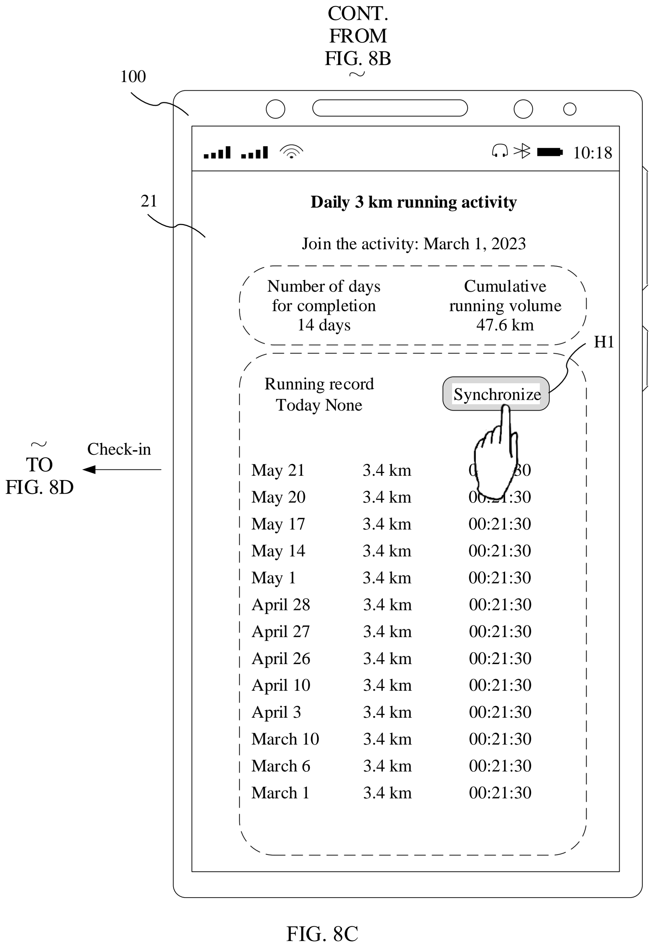

For example, as shown in FIG. 8C, after the Qupaotuan application^{®} 20 on the mobile phone 100 starts and the home page interface L2 is displayed, when the user taps a check-in button H2 on the home page interface L2, the Qupaotuan application^{®} 20 opens an activity interface 21. The activity interface 21 is configured to display activity information, for example, information such as time at which the user joins an activity, a running record of the user, a number of days for check-in completion by the user, and a cumulative running volume (namely, a cumulative running distance) of the user. When the user performs a data synchronization operation on the activity interface 21, for example, taps a synchronization button H1 on the activity interface 21, the Qupaotuan application^{®} 20 may receive a data synchronization operation instruction corresponding to the data synchronization operation.

In another example, after the Qupaotuan application^{®} 20 on the mobile phone 100 starts and the home page interface L2 is displayed, when the user says "synchronize data" or provides another data synchronization voice instruction, the Qupaotuan application^{®} 20 may receive the data synchronization voice instruction.

S107: The Qupaotuan application^{®} 20 on the mobile phone 100 sends a data synchronization request to the exercise and health application 10 on the mobile phone 100.

After receiving the data synchronization instruction, the Qupaotuan application^{®} 20 on the mobile phone 100 may send the data synchronization request to the exercise and health application 10 on the mobile phone 100.

S108: The exercise and health application 10 on the mobile phone 100 synchronizes the data to the Qupaotuan application^{®} 20 on the mobile phone 100.

After receiving the data synchronization request sent by the Qupaotuan application^{®} 20 on the mobile phone 100, the exercise and health application 10 on the mobile phone 100 synchronizes the data of the smartwatch 200 to the Qupaotuan application^{®} 20 on the mobile phone 100 in response to the request.

S109: The Qupaotuan application^{®} 20 on the mobile phone 100 updates data and completes a check-in task.

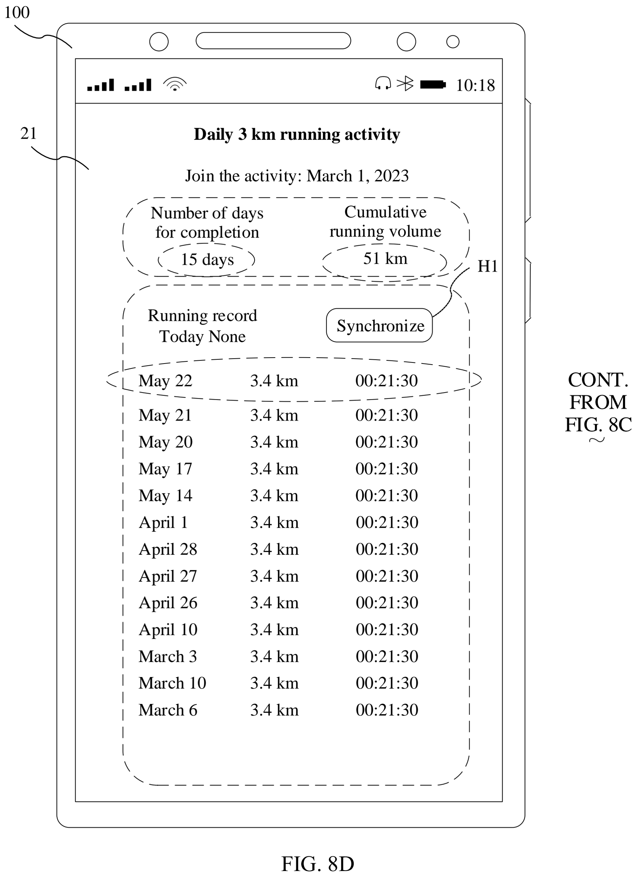

For example, as shown in FIG. 8D, after the exercise and health application 10 on the mobile phone 100 synchronizes the data of the smartwatch 200 to the Qupaotuan application^{®} 20 on the mobile phone 100, the activity interface 21 is refreshed, and data such as time, a running distance, and running duration in a running record is updated. For example, the data "May 22 3.4 km 00:21:30" is added to the running record, the check-in task "daily 3 km running activity" is completed, the number of days for completion is updated from "14 days" to "15 days", and the cumulative running volume is updated from "47.6 km" to "51 km".

In the embodiment described in FIG. 6, it can be learned from step S102 and step S106 that, the user needs to perform the data synchronization operation twice to synchronize the data of the smartwatch 200 to the Qupaotuan application^{®} 20 on the mobile phone 100. This results in many steps of the data synchronization operation, a long data synchronization path, and long consumed time. To reduce frequency of the data synchronization operation of the user and improve data synchronization efficiency, in a process of synchronizing the data of the smartwatch 200 to the Qupaotuan application^{®} 20 on the mobile phone 100, the exercise and health application 10 may be launched through the Qupaotuan application^{®} 20, so that the exercise and health application 10 synchronizes the data of the smartwatch 200 to the Qupaotuan application^{®} 20, without requiring the user to perform the data synchronization operation in the exercise and health application 10. In this way, data synchronization operations of the user can be reduced, and user experience can be improved.

The following describes a technical solution of a data synchronization method provided in embodiments of this application.

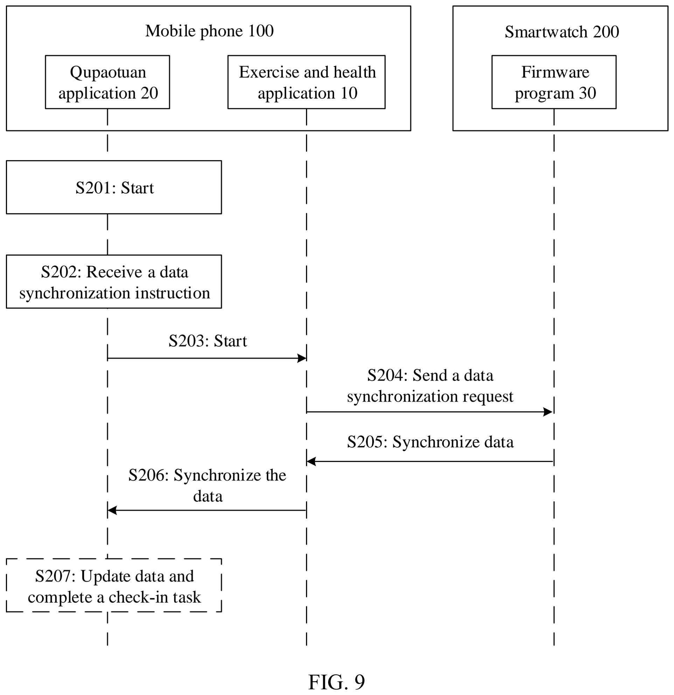

FIG. 9 is a flowchart 1 of an example of a data synchronization method according to an embodiment of this application.

For ease of understanding, the following describes the data synchronization method provided in embodiments of this application still by using the smartwatch as an example of the wearable device, using the mobile phone as an example of the terminal device connected to the wearable device, using the Qupaotuan application^{®} as an example of the first application, and using the exercise and health application as an example of the second application.

As shown in FIG. 9, the method includes the following steps.

S201: Start the Qupaotuan application^{®} 20 on the mobile phone 100.

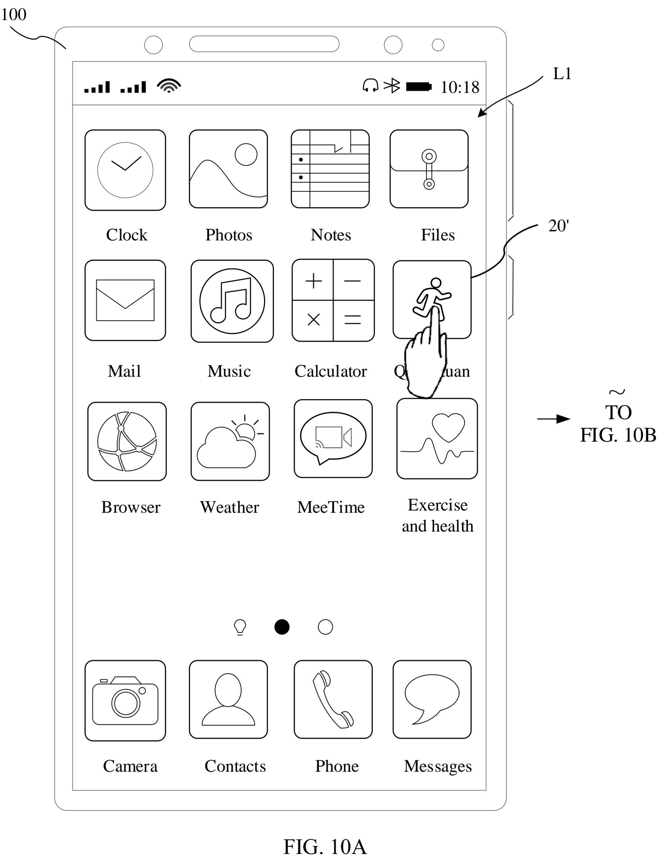

In some embodiments, as shown in FIG. 10A, when the user taps an icon 20' of the Qupaotuan application^{®} 20 on the desktop L1 of the mobile phone 100, the Qupaotuan application^{®} 20 on the mobile phone 100 starts.

S202: The Qupaotuan application^{®} 20 on the mobile phone 100 receives a data synchronization instruction.

In an embodiment of this application, the data synchronization instruction includes a data synchronization operation instruction, a data synchronization voice instruction, and another instruction.

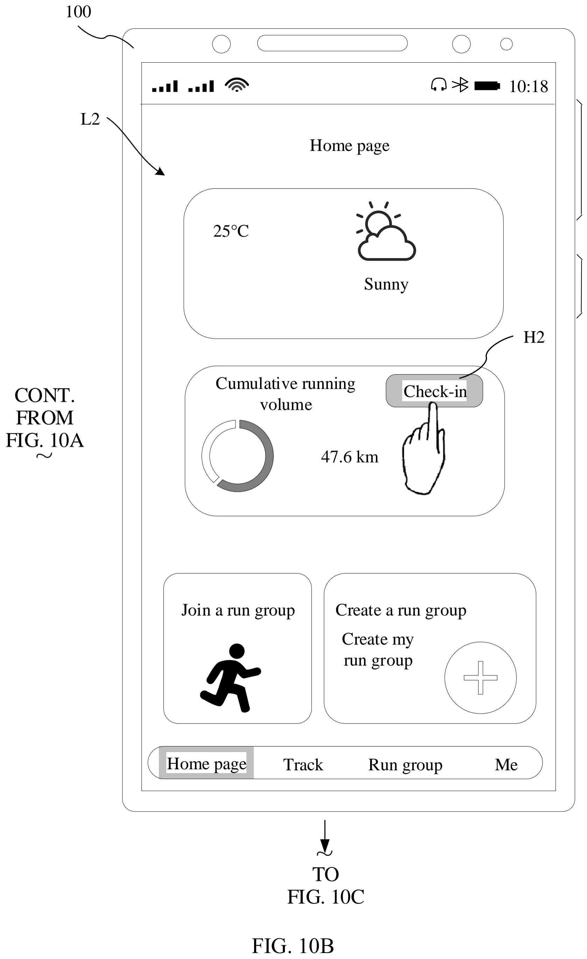

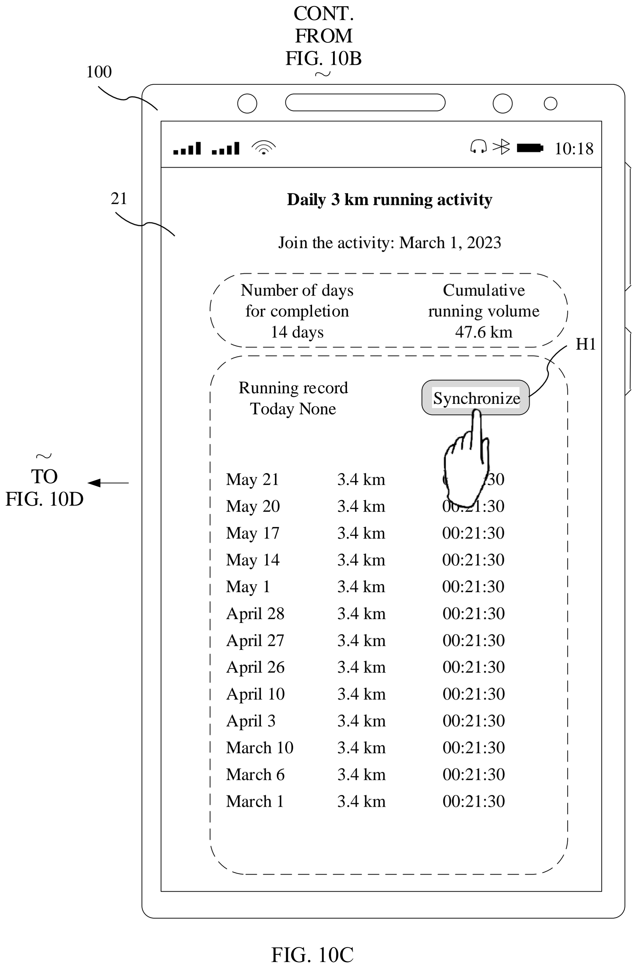

For example, as shown in FIG. 10B and FIG. 10C, after the Qupaotuan application^{®} 20 on the mobile phone 100 starts and the home page interface L2 is displayed, when the user taps a check-in button H2 on the home page interface L2, the Qupaotuan application^{®} 20 opens an activity interface 21. The activity interface 21 is configured to display activity information, for example, information such as time at which the user joins an activity, a running record of the user, a number of days for check-in completion by the user, and a cumulative running volume (namely, a cumulative running distance) of the user. When the user performs a data synchronization operation on the activity interface 21, for example, taps a synchronization button H1 on the activity interface 21, the Qupaotuan application^{®} 20 may receive a data synchronization operation instruction corresponding to the data synchronization operation.

In another example, after the Qupaotuan application^{®} 20 on the mobile phone 100 starts and the home page interface L2 is displayed, when the user says "synchronize data" or provides another data synchronization voice instruction, the Qupaotuan application^{®} 20 may receive the data synchronization voice instruction.

S203: The Qupaotuan application^{®} 20 on the mobile phone 100 starts the exercise and health application 10 on the mobile phone 100.

In some embodiments, after receiving the data synchronization instruction, the Qupaotuan application^{®} 20 on the mobile phone 100 may start the exercise and health application 10 by using a deep link (Deeplink) technique.

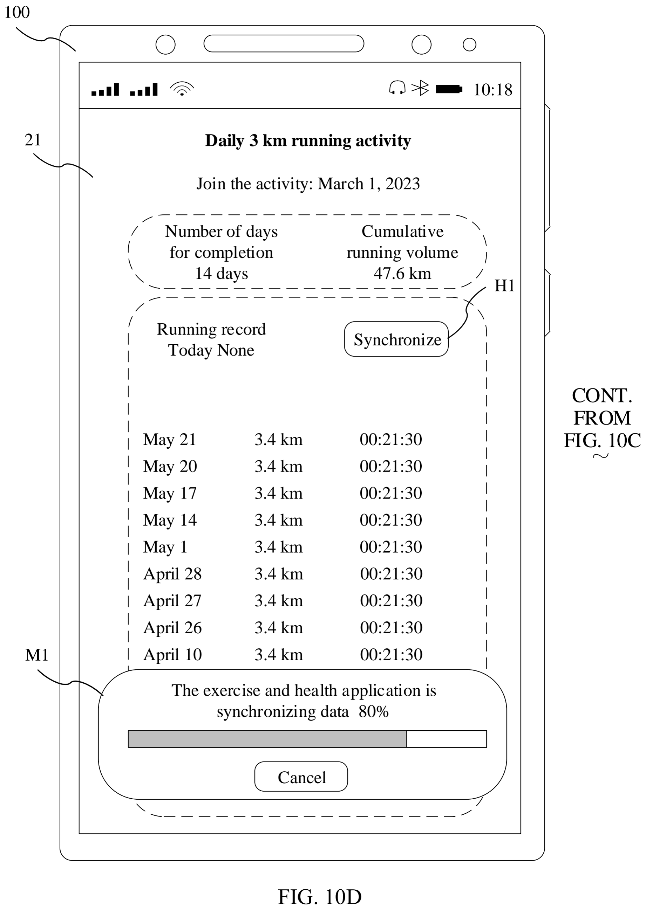

For example, as shown in FIG. 10D, when the user taps the synchronization button H1 on the activity interface 21 of the Qupaotuan application^{®} 20, the Qupaotuan application^{®} 20 may launch a data synchronization interface M1 of the exercise and health application 10 in the activity interface 21 through an interface link of the data synchronization interface M1 of the exercise and health application 10. The interface link of the data synchronization interface M1 of the exercise and health application 10 is preset in the Qupaotuan application^{®} 20. When the data synchronization interface M1 of the exercise and health application 10 is launched, the exercise and health application 10 starts. The data synchronization interface M1 may display a data synchronization progress of the exercise and health application 10, so that the user can visually learn a current data synchronization process.

In the example shown in FIG. 10A, FIG. 10B, FIG. 10C, and FIG. 10D, in consideration of power consumption, calling of the data synchronization interface M1 may be limited, to prevent the user from frequently calling the data synchronization interface M1 to increase power consumption of the mobile phone 100 and the smartwatch 200. For example, a number of times for daily calling of the data synchronization interface M1 is set, for example, 10 times, or a time interval of calling of the data synchronization interface M1 is set, for example, 300 seconds.

In some other embodiments, when the user taps the synchronization button H1 on the activity interface 21 of the Qupaotuan application^{®} 20, the Qupaotuan application^{®} 20 may send a start instruction to the exercise and health application 10, to indicate the exercise and health application 10 to start.

S204: The exercise and health application 10 on the mobile phone 100 sends a data synchronization request to the firmware program 30 of the smartwatch 200.

In some embodiments, a communication connection may be established between the mobile phone 100 and the smartwatch 200 by using a communication technique such as Bluetooth or Wi-Fi, so that mutual data transmission can be performed between the mobile phone 100 and the smartwatch 200.

After the exercise and health application 10 on the mobile phone 100 starts, the mobile phone 100 may send the data synchronization request to the firmware program 30 of the smartwatch 200, to request the firmware program 30 of the smartwatch 200 to synchronize data to the exercise and health application 10 on the mobile phone 100.

S205: The firmware program 30 of the smartwatch 200 synchronizes data to the exercise and health application 10 on the mobile phone 100.

After receiving the data synchronization request sent by the exercise and health application 10 on the mobile phone 100, the firmware program 30 of the smartwatch 200 may synchronize the data (for example, exercise and health data such as running duration, a running distance, a heart rate, blood oxygen saturation, and sleep time) of the smartwatch 200 to the exercise and health application 10 on the mobile phone 100.

S206: The exercise and health application 10 on the mobile phone 100 synchronizes the data to the Qupaotuan application^{®} 20 on the mobile phone 100.

After receiving the data synchronized by the firmware program of the smartwatch 200, the exercise and health application 10 on the mobile phone 100 may synchronize the data to the Qupaotuan application^{®} 20 on the mobile phone 100.

It needs to be noted that, in a process in which the exercise and health application 10 executes a data synchronization task, the exercise and health application 10 may synchronize, after the smartwatch 200 synchronizes all data that needs to be synchronized this time to the exercise and health application 10, the data to the Qupaotuan application^{®} 20, or may receive data of the smartwatch 200 and synchronize the data to the Qupaotuan application^{®} 20 at the same time. A data synchronization manner is not limited in embodiments of this application.

S207: The Qupaotuan application^{®} 20 on the mobile phone 100 updates data and completes a check-in task.

In some embodiments, after receiving the data synchronized by the exercise and health 10 on the mobile phone 100, the Qupaotuan application^{®} 20 on the mobile phone 100 may update the data and complete the check-in task.

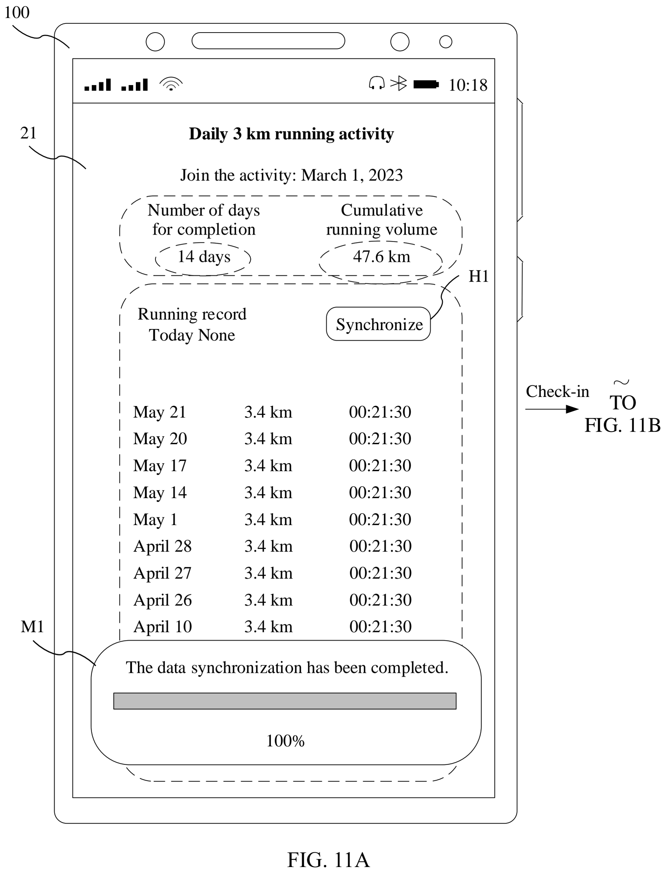

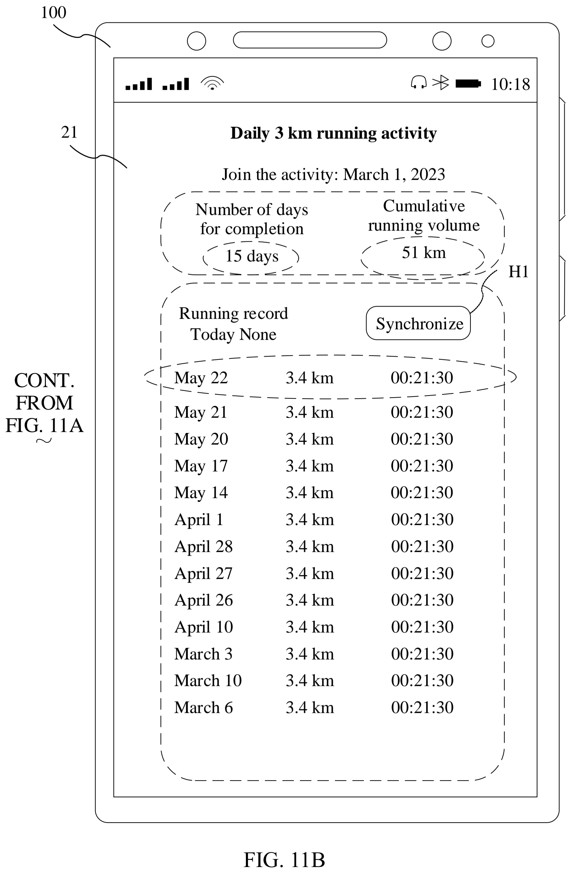

For example, as shown in FIG. 11A and FIG. 11B, when the exercise and health application 10 completes a data synchronization task, the data synchronization interface M1 of the exercise and health application 10 displays "data synchronization has been completed" on the activity interface 21 of the Qupaotuan application^{®} 20, indicating that the exercise and health application 10 has synchronized all the data of the smartwatch 200 that needs to be synchronized this time to the Qupaotuan application^{®} 20. After the exercise and health application 100 completes executing the data synchronization task, the data synchronization interface M1 may be closed, so that the mobile phone 100 returns to the activity interface 21 of the Qupaotuan application^{®} 20. In this process, the Qupaotuan application^{®} 20 may refresh the activity interface 21, and update data such as time, a running distance, and running duration in a running record. For example, the data "May 22 3.4 km 00:21:30" is added to the running record, the check-in task "daily 3 km running activity" is completed, the number of days for completion is updated from "14 days" to "15 days", and the cumulative running volume is updated from "47.6 km" to "51 km".

In embodiments of this application, the user does not need to perform the data synchronization operation twice in the first application and the second application, but only needs to perform the data synchronization operation once in the first application to synchronize the data of the wearable device to the first application. This results in low frequency of the data synchronization operation, shortening a data synchronization path, reducing data synchronization duration, and improving data synchronization efficiency.

In an embodiment of this application, the first application may be an ecosystem integration application, and the second application may be an ecosystem open application. The following explains and describes the ecosystem integration application and the ecosystem open application with reference to a data synchronization system provided in an embodiment of this application.

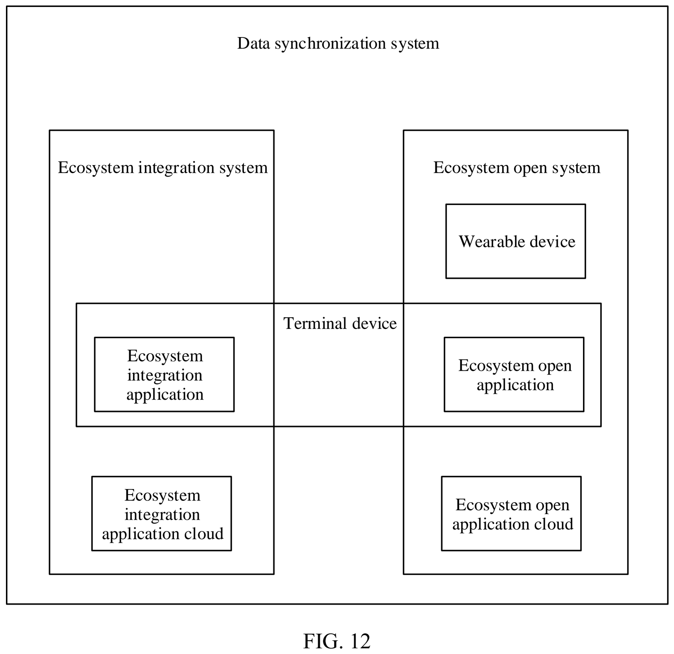

FIG. 12 is a diagram of an example of a structure of a data synchronization system according to an embodiment of this application. As shown in FIG. 12, the data synchronization system includes an ecosystem integration integration system and an ecosystem open system. The ecosystem integration system includes an ecosystem integration application on a terminal device and an ecosystem integration application cloud. The ecosystem open system includes a wearable device, an ecosystem open application on a terminal device connected to the wearable device, and an ecosystem open cloud.

The wearable device, the ecosystem open application on the terminal device, and the ecosystem open cloud are developed by a same ecosystem open vendor. The ecosystem open vendor, such as Huawei, Apple^{®}, Google^{®}, or Garmin^{®}, builds an interconnected ecosystem for terminals (such as a mobile phone, a tablet computer, a smartwatch, and a smart band). In an embodiment of this application, the ecosystem open application may be understood as an application that adapts to the wearable device. The ecosystem open application has data access permission of the wearable device and can access data of the wearable device. The ecosystem open cloud is a cloud computing platform or server that provides cloud services for the ecosystem open application, and can provide corresponding service data for the ecosystem open application.

The ecosystem integration application on the terminal device and the ecosystem integration cloud are developed by a same ecosystem integration vendor. The ecosystem integration vendor may be understood as a third-party application vendor. The ecosystem integration application may be understood as a third-party application (such as a Qupaotuan application^{®}, WeChat^{®}, QQ^{®}, or Keep^{®}). The ecosystem integration application does not adapt to the wearable device, does not have data access permission of the wearable device, and cannot directly access data of the wearable device, that is, cannot directly perform data interaction with the wearable device. However, the ecosystem integration application integrates capabilities provided by the ecosystem open application, and can perform data interaction with the ecosystem open application. The ecosystem integration application can perform data interaction with the wearable device through the ecosystem open application. The ecosystem integration cloud is a cloud computing platform or server that provides cloud services for the ecosystem integration application, and can provide corresponding service data for the ecosystem integration application.

The following describes, with reference to the data synchronization system, a process of synchronizing data of the wearable device to the ecosystem integration application on the terminal device.

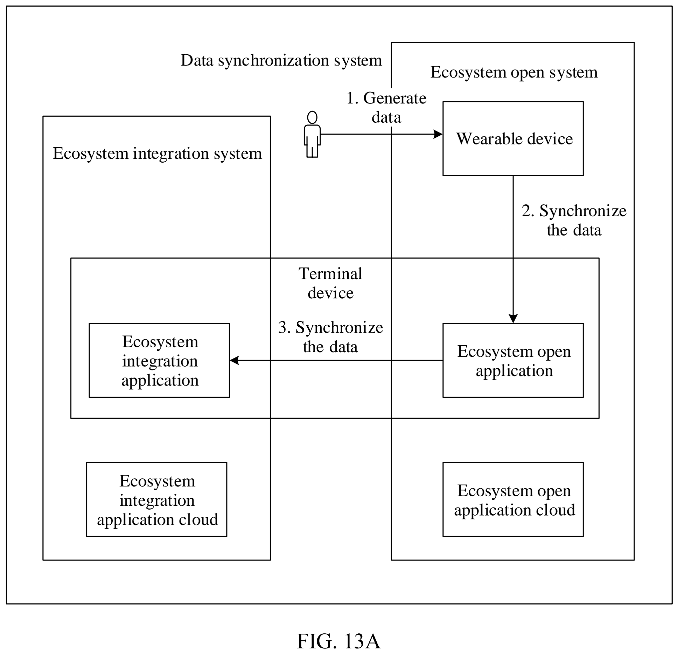

As shown in FIG. 13A, after a user uses a wearable device and data is generated, the wearable device may synchronize the data to an ecosystem open application on a terminal device connected to the wearable device, and then the ecosystem open application on the terminal device synchronizes the data to an ecosystem integration application on the terminal device. For example, in the example described in FIG. 9, the firmware program 30 of the smartwatch 200 first synchronizes the data of the smartwatch 200 to the exercise and health application 10 on the mobile phone 100, and then the exercise and health application 10 on the mobile phone 100 synchronizes the data to the Qupaotuan application^{®} 20 on the mobile phone 100.

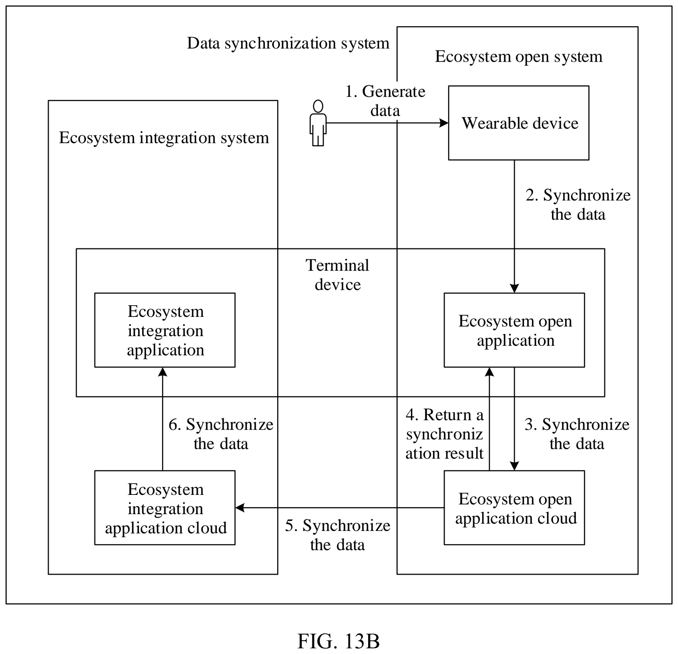

Because the data synchronization system further includes an ecosystem open cloud and an ecosystem integration cloud, with reference to the ecosystem open cloud and the ecosystem integration, the data of the wearable device may be further synchronized to the ecosystem integration application on the terminal device connected to the wearable device. As shown in FIG. 13B, after a user uses a wearable device and data is generated, the wearable device may synchronize the data to an ecosystem open application on a terminal device connected to the wearable device, and then the ecosystem open application on the terminal device synchronizes the data to an ecosystem open application cloud on the terminal device. After receiving the data synchronized by the ecosystem open application on the terminal device, the ecosystem open application cloud may return a synchronization result to the ecosystem open application on the terminal device. After the ecosystem open application successfully synchronizes the data to the ecosystem open cloud, the ecosystem open application cloud may synchronize the data to an ecosystem integration application cloud, and the ecosystem integration application cloud synchronizes the data to an ecosystem integration application on the terminal device.

The following specifically describes the data synchronization process in FIG. 13B still by using the smartwatch as an example of the wearable device, using the mobile phone as an example of the terminal device connected to the smartwatch, using the Qupaotuan application^{®} as an example of the ecosystem integration application (namely, the first application), using the exercise and health application as an example of the ecosystem open application (namely, the second application), using a Qupaotuan cloud^{®} as an example of the ecosystem integration application cloud, and using an exercise and health cloud as an example of the ecosystem open cloud.

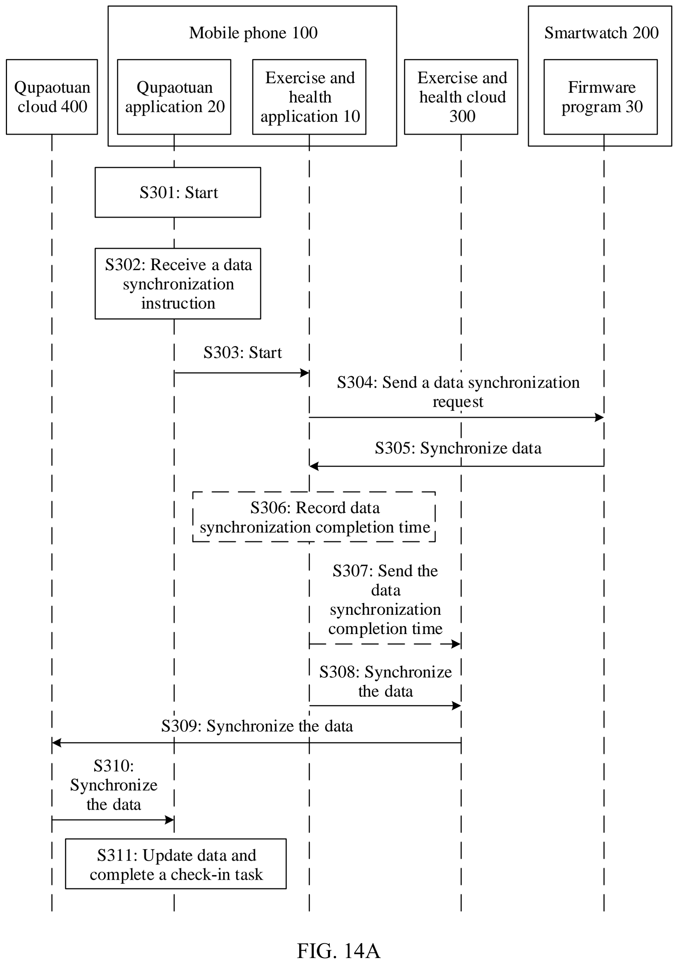

FIG. 14A is a flowchart 2 of an example of a data synchronization method according to an embodiment of this application.

As shown in FIG. 14A, the data synchronization method includes the following steps.

S301: Start the Qupaotuan application^{®} 20 on the mobile phone 100.

S302: The Qupaotuan application^{®} 20 on the mobile phone 100 receives a data synchronization instruction.

S303: The Qupaotuan application^{®} 20 on the mobile phone 100 starts the exercise and health application 10.

S304: The exercise and health application^{®} 20 on the mobile phone 100 sends a data synchronization request to the firmware program 30 of the smartwatch 200.

S305: The firmware program 30 of the smartwatch 200 synchronizes data to the exercise and health application 10 on the mobile phone 100.

Step S301 to step S305 are substantially the same as step S201 to step S205. Details are not described herein again.

Optionally, after receiving the data synchronized by the firmware program 30 of the smartwatch 200, the exercise and health application 10 on the mobile phone 100 may perform step S306 and step S307.

S306: The exercise and health application 10 on the mobile phone 100 records data synchronization completion time.

When receiving the data synchronized by the firmware program 30 of the smartwatch 200, the exercise and health application 10 on the mobile phone 100 may record the data synchronization completion time at which the firmware program 30 of the smartwatch 200 synchronizes the data of the smartwatch 200 to the exercise and health application 10, to synchronize the time to the exercise and health cloud 300.

S307: The exercise and health application 10 on the mobile phone 100 sends the data synchronization completion time to the exercise and health cloud 300.

The exercise and health cloud 300 is a cloud server associated with the exercise and health application 10, and can provide related data for the exercise and health application 10.

After recording the data synchronization completion time of the smartwatch 200, the exercise and health application 10 on the mobile phone 100 may send the data synchronization completion time to the exercise and health cloud 300, so that the exercise and health cloud 300 may determine latest synchronized data based on the data synchronization completion time, and then synchronize the latest synchronized data to the Qupaotuan cloud^{®} 400.

S308: The exercise and health application 10 on the mobile phone 100 synchronizes the data to the exercise and health cloud 300.

After receiving the data synchronized by the firmware program 30 of the smartwatch 200, the exercise and health application 10 on the mobile phone 100 may synchronize the data to the exercise and health cloud 300.

S309: The exercise and health cloud 300 synchronizes the data to the Qupaotuan cloud^{®} 400.

The Qupaotuan cloud^{®} 400 is a cloud server associated with the Qupaotuan application^{®} 20, and can provide related data for the Qupaotuan application^{®} 20.

After the exercise and health application 10 on the mobile phone 100 synchronizes the data of the smartwatch 200 and the data synchronization completion time of the data to the exercise and health cloud 300, the exercise and health cloud 300 may determine latest synchronized data based on the data synchronization completion time, and synchronize the data to the Qupaotuan application^{®} 400.

In some embodiments, after the data of the smartwatch 200 is synchronized to the exercise and health cloud 300, the exercise and health cloud 300 may synchronize the data to the exercise and health application 10 installed on another terminal device of the user. For example, when the user logs in to the exercise and health application on a notebook computer by using an account that is the same as that of the exercise and health application on the mobile phone 100 of the user, the exercise and health cloud 300 may synchronize the data to the exercise and health application on the notebook computer.

S310: The Qupaotuan cloud^{®} 400 synchronizes the data to the Qupaotuan application^{®} 20 on the mobile phone 200.

After receiving the data that is of the smartwatch 200 and that is synchronized by the exercise and health cloud 300, the Qupaotuan cloud^{®} 400 may synchronize the data to the Qupaotuan application^{®} 20 on the mobile phone 100.

It may be understood that, after the data of the smartwatch 200 is synchronized to the Qupaotuan cloud^{®} 400, the Qupaotuan cloud^{®} 400 may further synchronize the data to the Qupaotuan application^{®} installed on another terminal device of the user. For example, when the user logs in to a notebook computer and the mobile phone 100 with a same account, the Qupaotuan cloud^{®} 400 on the mobile phone 100 may synchronize the data to the Qupaotuan application^{®} on the notebook computer.

S311: The Qupaotuan application^{®} 20 on the mobile phone 100 updates data and completes a check-in task.

Step S310 is substantially the same as step S207. Details are not described herein again.

In an embodiment of this application, the data of the wearable device is synchronized to a cloud computing platform. The cloud computing platform may synchronize the data of the wearable device to another associated device connected to the wearable device, without requiring the user to perform a data synchronization process again in the another associated device, thereby improving data synchronization efficiency.

In the embodiment described in FIG. 14A, the exercise and health application 10 is directly started through the Qupaotuan application^{®} 20 on the mobile phone 100. In some embodiments, the exercise and health application 10 on the mobile phone 100 may alternatively be launched (started) through a push server. The following describes a process in which the push server launches the exercise and health application 10 on the mobile phone.

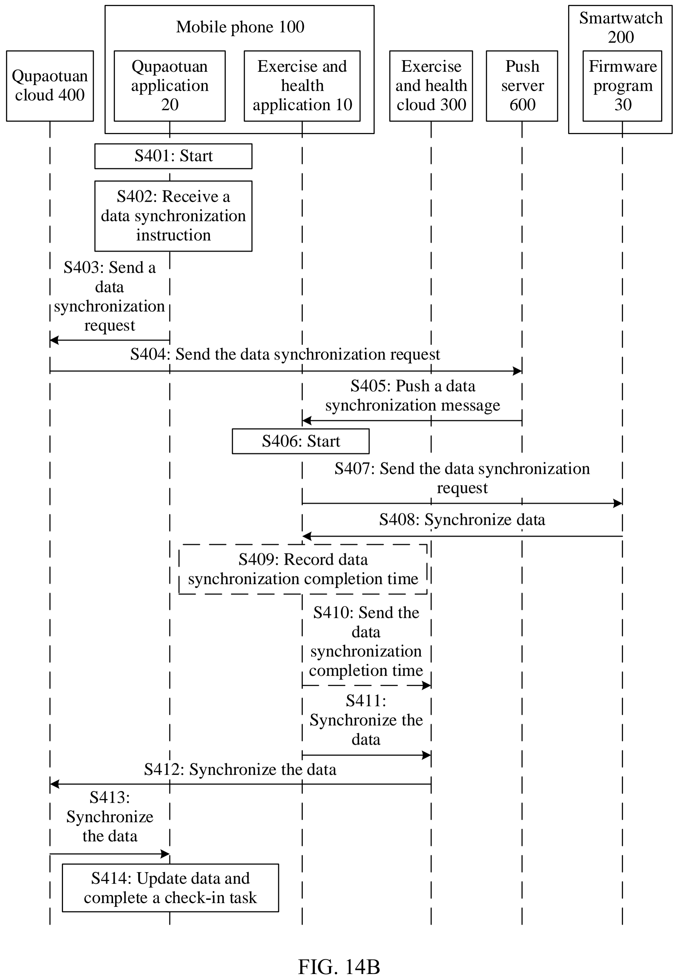

FIG. 14B is a flowchart 3 of an example of a data synchronization method according to an embodiment of this application.

As shown in FIG. 14B, the data synchronization method includes the following steps.

S401: Start the Qupaotuan application^{®} 20 on the mobile phone 100.

S402: The Qupaotuan application^{®} 20 on the mobile phone 100 receives a data synchronization instruction.

Step S401 and step S402 are substantially the same as step S301 and step S302. Details are not described herein again.

S403: The Qupaotuan application^{®} 20 on the mobile phone 100 sends a data synchronization request to the Qupaotuan cloud^{®} 400.

For example, as shown in FIG. 10C, when the user taps the synchronization button H1 on the activity interface 21 of the Qupaotuan application^{®} 20 on the mobile phone 100, the Qupaotuan application^{®} 20 on the mobile phone 100 may send the data synchronization request to the Qupaotuan cloud^{®} 400.

S404: The Qupaotuan cloud^{®} 400 sends the data synchronization request to a push server 600.

After receiving the data synchronization request sent by the Qupaotuan application^{®} 20 on the mobile phone 100, the Qupaotuan cloud^{®} 400 may send the data synchronization request to the push server 600.

S405: The push server 600 pushes a data synchronization message to the exercise and health application 10 on the mobile phone 100.

After receiving the data synchronization request sent by the Qupaotuan cloud^{®} 400, the push server 600 may push the data synchronization message to the exercise and health application 10 on the mobile phone 100, to launch the exercise and health application 10 on the mobile phone 100.

In some embodiments, the push server 600 may first push the message to a push application on the mobile phone 100, and then the push application pushes the message to the exercise and health application 10 on the mobile phone 100. The push server 600 is associated with the push application on the mobile phone 100. The push application may be a persistent application on the mobile phone 100. The persistent application is an application that is always in a keep-alive state.

S406: Start the exercise and health application 10 on the mobile phone 100.

After receiving the message pushed by the push server 600, the exercise and health application 10 on the mobile phone 100 starts in response to the message.

S407: The Qupaotuan application^{®} 20 on the mobile phone 100 sends the data synchronization request to the firmware program 30 of the smartwatch 200.

S408: The firmware program 30 of the smartwatch 200 synchronizes data to the exercise and health application 10 on the mobile phone 100.

S409: The exercise and health application 10 on the mobile phone 100 records data synchronization completion time.

S410: The exercise and health application 10 on the mobile phone 100 sends the data synchronization completion time to the exercise and health cloud 300.

S411: The exercise and health application 10 on the mobile phone 100 synchronizes the data to the exercise and health cloud 300.

S412: The exercise and health cloud 300 synchronizes the data to the Qupaotuan cloud^{®} 400.

S413: The Qupaotuan cloud^{®} 400 synchronizes the data to the Qupaotuan application^{®} 20 on the mobile phone 200.

S414: The Qupaotuan application^{®} 20 on the mobile phone 100 updates data and completes a check-in task.

Step S407 to step S414 are substantially the same as step S304 to step S311. Details are not described herein again.

This embodiment of this application provides another starting manner. After the Qupaotuan application^{®} on the mobile phone starts, the exercise and health application on the mobile phone may be started by using the push server. In this manner, the exercise and health application can be started without launching an interface link of the exercise and health application, so that there is no need to set the interface link of the exercise and health application in advance in the Qupaotuan application^{®}, providing strong applicability.

The embodiments described in FIG. 9, FIG. 14A, and FIG. 14B are merely data synchronization between two devices (the mobile phone and the smartwatch). In some scenarios, data synchronization further needs to be performed among a plurality of devices. For example, in a scenario in which a mobile phone is separately connected to a smartwatch and a head unit, data of the smartwatch needs to be first synchronized to the mobile phone, and then the mobile phone synchronizes the data of the smartwatch to the head unit, so that the head unit can provide a corresponding service for a user based on the data of the smartwatch.

The following describes a data synchronization procedure among a plurality of devices by using a smartwatch, a mobile phone, and a head unit as an example.

It needs to be noted that the smartwatch may be another wearable device such as a band, a sports watch, smart glasses, or a smart helmet, and the mobile phone and the head unit may be another terminal device such as a notebook computer or a tablet computer.

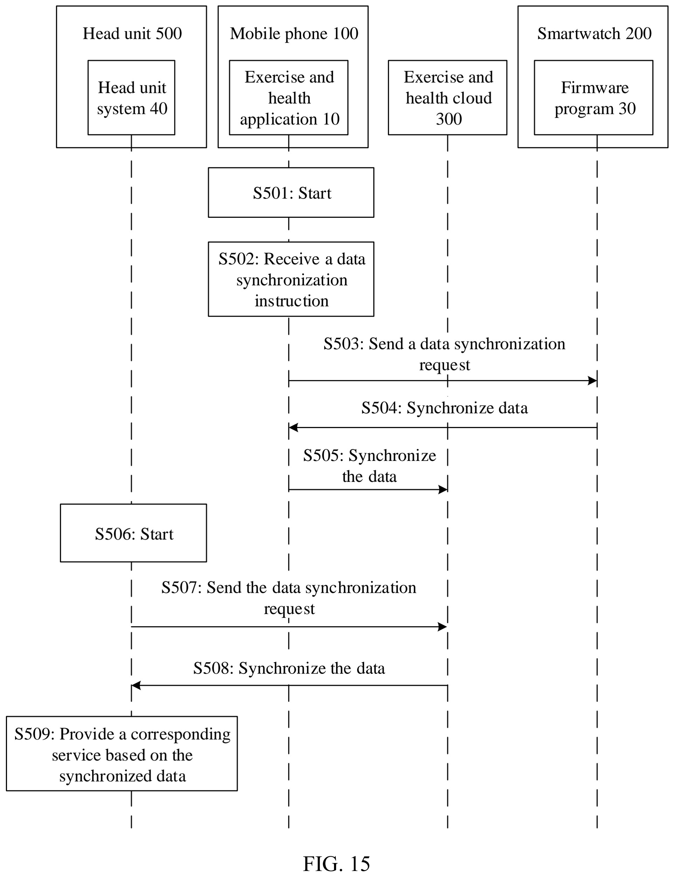

FIG. 15 is a flowchart 3 of an example of a data synchronization method according to some embodiments.

As shown in FIG. 15, the data synchronization method includes the following steps.

S501: Start the exercise and health application 10 on the mobile phone 100.

S502: The exercise and health application 10 on the mobile phone 100 receives a data synchronization instruction.

S503: The exercise and health application 10 on the mobile phone 100 sends a data synchronization request to the firmware program 30 of the smartwatch 200.

S504: The firmware program 30 of the smartwatch 200 synchronizes data to the exercise and health application 10 on the mobile phone 100.

Step S501 to step S504 are substantially the same as step S101 to step S104. Details are not described herein again.

S505: The exercise and health application 10 on the mobile phone 100 synchronizes the data to the exercise and health cloud 300.

After receiving the data synchronized by the firmware program 30 of the smartwatch 200, the exercise and health application 10 on the mobile phone 100 may synchronize the data to the exercise and health cloud.

S506: Start a head unit system 40 of a head unit 500.

When the user turns on the head unit 500, the head unit system 40 starts.

S507: The head unit system 40 of the head unit 500 sends a data synchronization request to the exercise and health cloud 300.

After the head unit system 40 of the head unit 500 starts, the head unit system 40 may automatically send the data synchronization request to the exercise and health cloud 300, to request the exercise and health cloud 300 to synchronize the data of the smartwatch 200 to the head unit system 40.

S508: The exercise and health cloud 300 synchronizes the data to the head unit system 40 of the head unit 500.

After receiving the data synchronization request sent by the head unit system 40 of the head unit 500, the exercise and health cloud 300 may synchronize the data of the smartwatch 200 to the head unit system 40 of the head unit 500 in response to the request.

S509: The head unit system 40 of the head unit 500 provides a corresponding service based on the synchronized data.

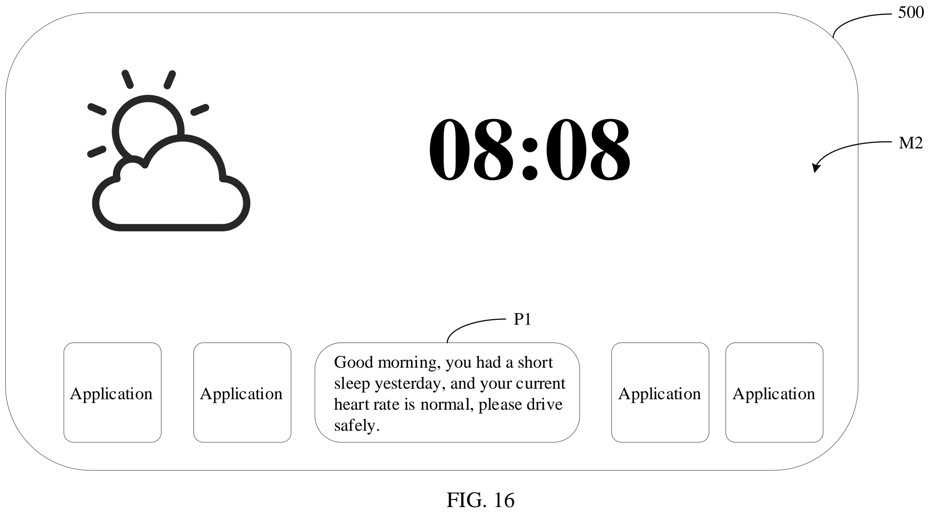

After receiving the data that is of the smartwatch 200 and that is synchronized by the exercise and health cloud 300, the head unit system 40 of the head unit 500 may provide the corresponding service for the user based on the data. For example, as shown in FIG. 16, the data synchronized by the smartwatch 200 to the head unit system 40 of the head unit 500 is sleep duration (for example, six hours) and a heart rate (for example, 80 beats per minute). The head unit system 40 may display corresponding prompt information in a pop-up window P1 on a main interface M2 based on the data, for example, "good morning, you had a short sleep yesterday, and your current heart rate is normal, please drive safely", to prompt the user to drive safely.

It can be learned from step S502 that, in this embodiment, when the data of the smartwatch 200 is synchronized to the head unit system 40 of the head unit 500, the user needs to first perform a data synchronization operation once on the exercise and health application 10 on the mobile phone 100, to synchronize the data of the smartwatch 200 to the head unit system 40 of the head unit 500, but cannot automatically synchronize the data of the smartwatch 200 to the head unit system 40 of the head unit 500.

To improve user experience and implement data synchronization that is not perceived by the user, after the head unit system 40 of the head unit 500 starts, a data synchronization notification may be delivered to the exercise and health application 10 on the mobile phone 100 through a cloud computing platform, so that the exercise and health application 10 on the mobile phone 100 requests the firmware program 30 of the smartwatch 200 to synchronize the data of the smartwatch 200 to the exercise and health application 10, and synchronizes the data to the cloud computing platform, and the cloud computing platform synchronizes the data to the head unit system 40 of the head unit 500. In this way, the user can automatically synchronize the data of the smartwatch 200 to the head unit system 40 of the head unit 500 without performing the data synchronization operation. The following specifically describes the data synchronization manner.

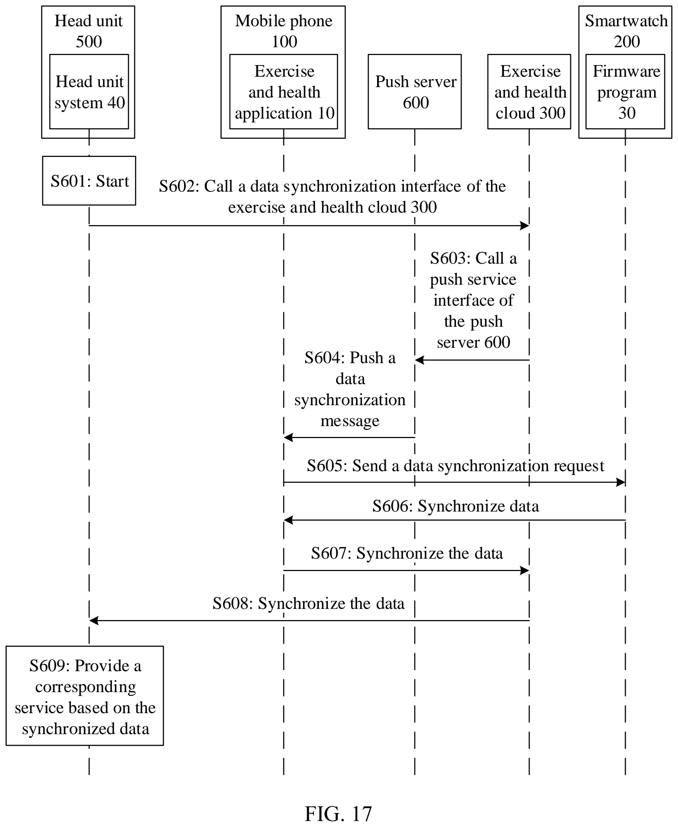

FIG. 17 is a flowchart 4 of an example of a data synchronization method according to an embodiment of this application.

S601: Start a head unit system 40 of a head unit 500.

When the head unit 500 turns on, the head unit system 40 of the head unit 500 starts.

S602: The head unit system 40 of the head unit 500 calls a data synchronization interface of the exercise and health cloud 300.

After the head unit system 40 of the head unit 500 starts, the head unit system 40 may call the data synchronization interface provided by the exercise and health cloud 300 to send a data synchronization request to the exercise and health cloud 300.

S603: The exercise and health cloud 300 calls a push service interface of the push server 600.

The push server 600 is configured to push a message, for example, a data synchronization message, to the mobile phone 100.

After receiving the data synchronization request sent by the head unit system 40 of the head unit 500, the exercise and health cloud 300 may call the push service interface provided by the push server 600 to send the data synchronization request to the push server 600, to request the push server 600 to push a data synchronization message to the exercise and health application 10 on the mobile phone 100.

S604: The push server 600 pushes a data synchronization message to the exercise and health application 10 on the mobile phone 100.

After receiving the data synchronization request sent by the exercise and health cloud 300, the push server 600 may push the data synchronization message to the exercise and health application 10 on the mobile phone 100, to notify the exercise and health application 10 on the mobile phone 100 to perform a data synchronization action.

S605: The exercise and health application 10 on the mobile phone 100 sends a data synchronization request to the firmware program 30 of the smartwatch 200.

In some embodiments, if the exercise and health application 10 on the mobile phone 100 supports silent message pushing, after receiving the data synchronization message pushed by the push server, the exercise and health application 10 on the mobile phone 100 may automatically send the data synchronization request to the firmware program 30 of the smartwatch 200 in response to the data synchronization message, to request the firmware program 30 of the smartwatch 200 to synchronize data to the exercise and health application 10. In this case, the user can synchronize the data of the smartwatch to the head unit without performing any operation, thereby implementing data synchronization that is not perceived by the user.

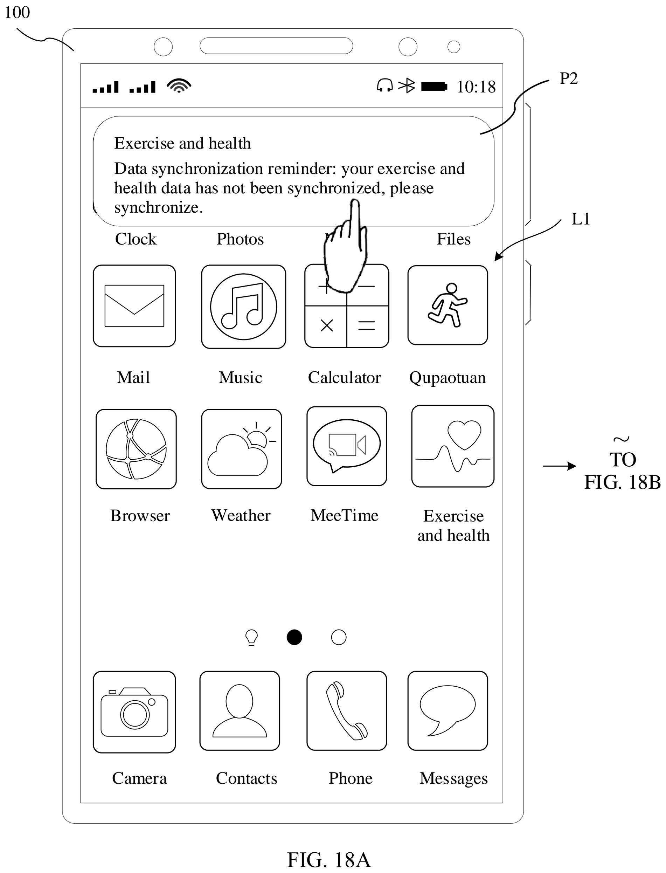

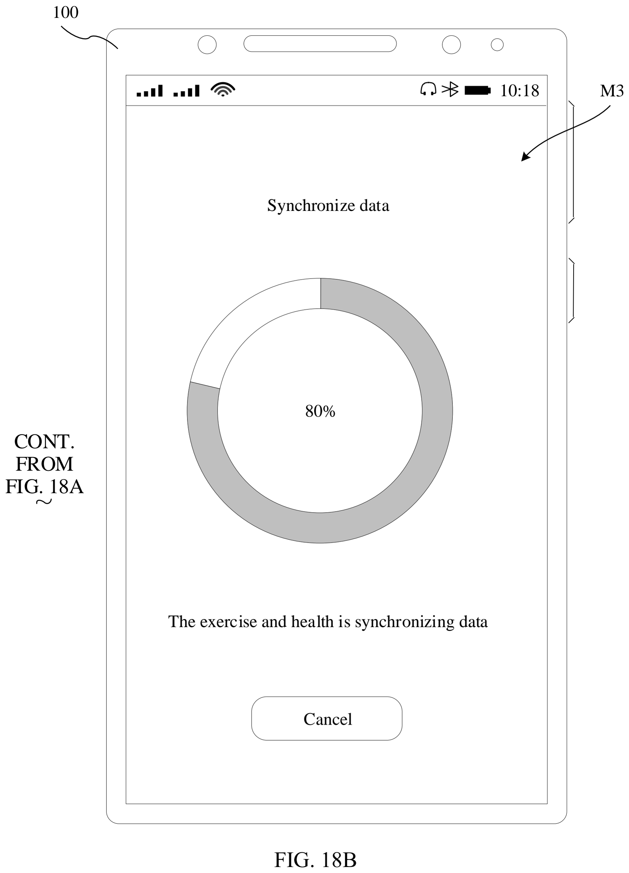

In some other embodiments, if the exercise and health application 10 on the mobile phone 100 does not support silent message pushing, after the exercise and health application 10 on the mobile phone 100 receives the data synchronization message pushed by the push server, the exercise and health application 10 may display a first component on a display of the mobile phone 100. The first component may be an interactive component such as a pop-up window, a button, or a text box. The first component may include prompt information for prompting synchronization of the data of the smartwatch 200, to prompt the user to synchronize the data of the smartwatch 200 to the mobile phone 100. For example, as shown in FIG. 18A and FIG. 18B, the exercise and health application 10 may display a pop-up window P2 (as an example of the first component) on a desktop L1 of the mobile phone 100. The pop-up window P2 may display the prompt information of data synchronization, for example, "data synchronization reminder: your exercise and health data has not been synchronized, please synchronize". When the user taps the pop-up window P2, the mobile phone 100 may directly jump to a data synchronization interface M3 of the exercise and health application 10. In this case, the exercise and health application 10 may send the data synchronization request to the firmware program 30 of the smartwatch 200, to request the firmware program 30 of the smartwatch 200 to synchronize the data to the exercise and health application 10. When the firmware program 30 of the smartwatch 200 synchronizes the data to the exercise and health application 10 on the mobile phone 100, the data synchronization interface M3 may further display a data synchronization progress. It needs to be noted that the user may alternatively perform a touch and hold operation, a left slide operation, a right slide operation, or another operation on the pop-up window P2 of the exercise and health application 10, to control the mobile phone 100 to jump to the data synchronization interface M3 of the exercise and health application 10. This is not limited.

In the embodiment shown in FIG. 18A and FIG. 18B, although the exercise and health application 10 does not automatically execute a data synchronization task, a data synchronization operation procedure is simplified. In the embodiment shown in FIG. 18A and FIG. 18B, the user only needs to perform an operation once on the pop-up window P2 on the desktop L1 of the mobile phone 100 to control the exercise and health application 10 to execute the data synchronization task, without requiring the user to first open the exercise and health application 10 on the desktop L1 of the mobile phone 100 and then control, in the interface of the exercise and health application 10, the exercise and health application to execute the data synchronization task. This reduces operation frequency of the user and improves data synchronization efficiency.

S606: The firmware program 30 of the smartwatch 200 synchronizes data to the exercise and health application 10 on the mobile phone 100.

After receiving the data synchronization request sent by the exercise and health application 10 on the mobile phone 100, the firmware program 30 of the smartwatch 200 synchronizes the data (for example, exercise and health data such as running duration, a running distance, a heart rate, blood oxygen saturation, and sleep time) of the smartwatch 200 to the exercise and health application 10 on the mobile phone 100 in response to the request.

S607: The exercise and health application 10 on the mobile phone 100 synchronizes the data to the exercise and health cloud 300.

After the firmware program 30 of the smartwatch 200 synchronizes the data of the smartwatch 200 to the exercise and health application 10 on the mobile phone 100, the exercise and health application 10 on the mobile phone 100 may synchronize the data to the exercise and health cloud 300.

S608: The exercise and health cloud 300 synchronizes the data to the head unit system 40 of the head unit 500.

After the exercise and health application 10 on the mobile phone 100 may synchronize the data of the smartwatch 200 to the exercise and health cloud 300, the exercise and health cloud 300 may synchronize the data to the head unit system 40 of the head unit 500. For coherent description, the following specifically describes a process in which the exercise and health cloud 300 synchronize the data to the head unit system 40 of the head unit 500.

S609: The head unit system 40 of the head unit 500 synchronizes the data to a head unit cloud 700.

Step S609 is substantially the same as step S509. Details are not described herein again.

In an embodiment of this application, the head unit may push the data synchronization message to the exercise and health application on the mobile phone through the push server to start the exercise and health application, and then the exercise and health application synchronizes the data of the smartwatch to the head unit, without requiring the user to manually start the exercise and health application and then perform the data synchronization operation in the exercise and health application to control the exercise and health application to synchronize the data of the smartwatch to the head unit. In this way, user operations are reduced, and data synchronization efficiency is improved.

The following describes the process in which the exercise and health cloud 300 synchronizes the data to the head unit system 40 of the head unit 500.

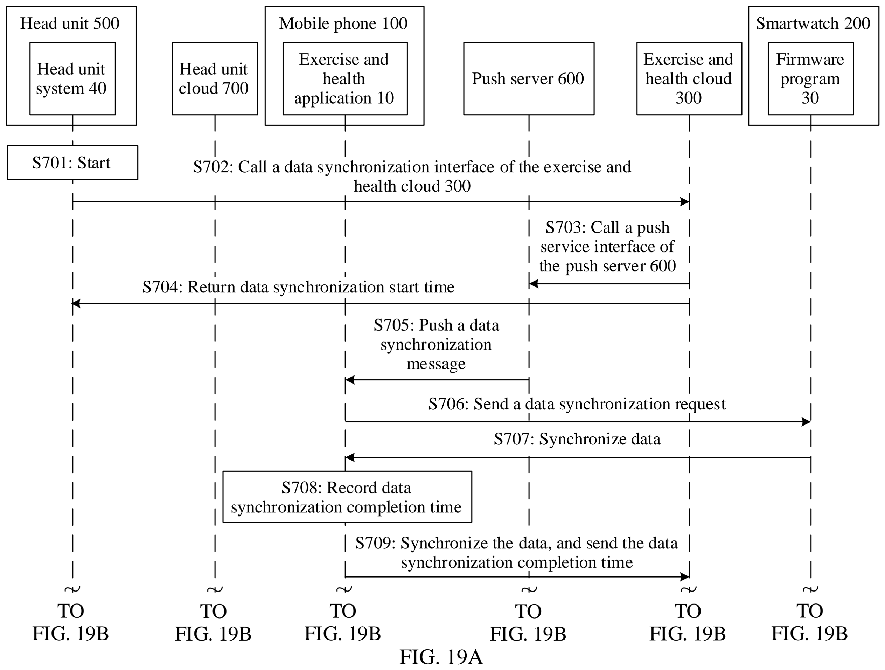

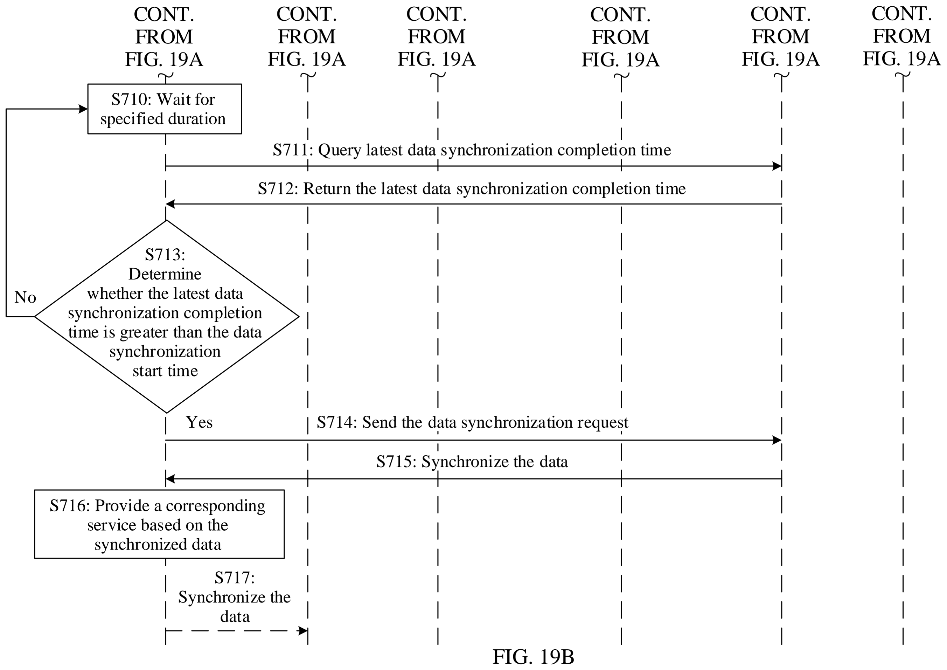

FIG. 19A and FIG. 19B are a flowchart 5 of an example of a data synchronization method according to an embodiment of this application.

As shown in FIG. 19A and FIG. 19B, the data synchronization method includes the following steps.

S701: Start a head unit system 40 of a head unit 500.

S702: The head unit system 40 of the head unit 500 calls a data synchronization interface of the exercise and health cloud 300.

S703: The exercise and health cloud 300 calls a push service interface of the push server 600.

Step S701 to step S703 are substantially the same as step S601 to step S603. Details are not described herein again.

S704: The exercise and health cloud 300 returns data synchronization start time to the head unit system 40 of the head unit 500.

After the exercise and health cloud 300 calls the push service interface of the push server 600, the exercise and health cloud 300 may return the data synchronization start time of data synchronization to the head unit system 40 of the head unit 500.

S705: The push server 600 pushes a data synchronization message to the exercise and health application 10 on the mobile phone 100.

S706: The exercise and health application 10 on the mobile phone 100 sends a data synchronization request to the firmware program 30 of the smartwatch 200.

S707: The firmware program 30 of the smartwatch 200 synchronizes data to the exercise and health application 10 on the mobile phone 100.

Step S705 to step S707 are substantially the same as step S604 to step S606. Details are not described herein again.

S708: The exercise and health application 10 on the mobile phone 100 records data synchronization completion time.

After receiving the data synchronized by the firmware program 30 of the smartwatch 200, the exercise and health application 10 on the mobile phone 100 may record the data synchronization completion time at which the data is synchronized to the exercise and health application 10.

S709: The exercise and health application 10 on the mobile phone 100 synchronizes the data to the exercise and health cloud 300, and sends the data synchronization completion time.

After recording the data synchronization completion time of the smartwatch 200, the exercise and health application 10 on the mobile phone 100 may synchronize the data of the smartwatch 200 to the exercise and health cloud 300, and send the data synchronization completion time to the exercise and health cloud 300.

S710: The head unit system 40 of the head unit 500 waits for specified duration.

The specified duration may be 10 seconds, 15 seconds, 20 seconds, or the like.

The head unit system 40 of the head unit 500 needs to first wait for the exercise and health application 10 on the mobile phone 100 to synchronize the data of the smartwatch 200 to the exercise and health cloud 300, to synchronize the data of the smartwatch 200 from the exercise and health cloud 300. Therefore, the head unit system 40 of the head unit 500 needs to first wait for a period of time, to perform a data synchronization action after the exercise and health application 10 on the mobile phone 100 completes data synchronization.

S711: The head unit system 40 of the head unit 500 queries latest data synchronization completion time from the exercise and health cloud 300.

In some embodiments, after waiting for the specified duration, the head unit system 40 of the head unit 500 calls a message receipt interface provided by the exercise and health cloud 300, and queries the latest data synchronization completion time from the exercise and health cloud 300.

S712: The exercise and health cloud 300 returns the latest data synchronization completion time to the head unit system 40 of the head unit 500.

After the head unit system 40 of the head unit 500 calls the message receipt interface provided by the exercise and health cloud 300, the exercise and health cloud 300 queries the latest data synchronization completion time, and returns the data synchronization completion time to the head unit system 40 of the head unit 500.

S713: The head unit system 40 of the head unit 500 determines whether the latest data synchronization completion time is greater than the data synchronization start time.

If the latest data synchronization completion time is greater than the data synchronization start time, step S714 is performed. If the latest data synchronization completion time is not greater than the data synchronization start time, step S710 is performed.

After receiving the latest data synchronization completion time returned by the exercise and health cloud 300, the head unit system 40 of the head unit 500 may determine whether the data synchronization completion time is greater than the data synchronization start time. If the data synchronization completion time is greater than the data synchronization start time, the exercise and health application 10 on the mobile phone 100 has synchronized the data of the smartwatch 200 to the exercise and health cloud 300. If the data synchronization completion time is not greater than the data synchronization start time, the exercise and health application 10 on the mobile phone 100 has not synchronized the data of the smartwatch 200 to the exercise and health cloud 300, and the head unit system 40 needs to continue to wait for specified duration.

In some cases, when an abnormal situation occurs during data synchronization, to avoid indefinite waiting of the head unit system 40, a maximum quantity of times for which the head unit system 40 performs a waiting process may be set, for example, three times. When a quantity of times for which the head unit system performs the waiting process reaches the maximum quantity of times, a data synchronization task ends.

S714: The head unit system 40 of the head unit 500 sends a data synchronization request to the exercise and health cloud 300.

When the head unit system 40 of the head unit 500 determines that the latest data synchronization completion time is greater than the data synchronization start time, the head unit system 40 may send the data synchronization request to the exercise and health cloud, to request the exercise and health cloud 300 to synchronize the data of the smartwatch 200 to the head unit system 40.

S715: The exercise and health cloud 300 synchronizes the data to the head unit system 40 of the head unit 500.

After receiving the data synchronization request sent by the head unit system 40 of the head unit 500, the exercise and health cloud 300 synchronizes the data of the smartwatch 200 to the head unit system 40 of the head unit 500 in response to the data synchronization request.

S716: The head unit system 40 of the head unit 500 provides a corresponding service based on the synchronized data.

Step S716 is substantially the same as step S509. Details are not described herein again.

S717: The head unit system 40 of the head unit 500 synchronizes the data to a head unit cloud 700.

The head unit cloud 700 is a cloud computing platform associated with the head unit system 40, and can provide data and services for the head unit system.

After receiving the data synchronized by the exercise and health cloud 300, the head unit system 40 of the head unit 500 may synchronize the data to the head unit cloud 700. The head unit cloud 700 stores the data of the smartwatch 200 and synchronizes the data of the smartwatch 200 to a head unit system of another vehicle of the user, for example, a head unit system of another vehicle that uses a same account as that of the head unit system 40 of the head unit 500 to log in.

It needs to be noted that a sequence of step S716 and step S717 is not limited in embodiments of this application.

In an embodiment of this application, if the exercise and health application on the mobile phone supports silent message pushing, the user can automatically synchronize the data of the smartwatch to the head unit system without performing a task operation, thereby implementing data synchronization that is not perceived by the user. If the exercise and health application on the mobile phone does not support silent message pushing, the user only needs to tap data synchronization prompt information displayed on the mobile phone, to synchronize the data of the smartwatch to the head unit system of the head unit. This operation is simple, and data synchronization efficiency is high.

In the embodiment described in FIG. 19A and FIG. 19B, because the head unit system 40 of the head unit 500 cannot know whether the exercise and health application 10 on the mobile phone 100 completes data synchronization, that is, cannot perform whether step S709 is completed, the head unit system 40 can only wait for a period of time, then query the latest data synchronization completion time, then determine, based on the latest data synchronization completion time, whether the exercise and health application on the mobile phone 100 completes data synchronization, and then perform a subsequent step based on a determining result.

In some embodiments, the user may subscribe to a message of the exercise and health cloud 300 on the head unit system 40 of the head unit 500, so that when data of the exercise and health cloud 300 is updated, the head unit system 40 can be notified. In this case, after receiving the data synchronized by the exercise and health application 10 on the mobile phone 100, the exercise and health cloud 300 may notify the head unit system 40 of the head unit 500 that data synchronization has been completed, without requiring the head unit system to perform a process of determining whether data synchronization is completed. The following specifically describes the data synchronization manner.

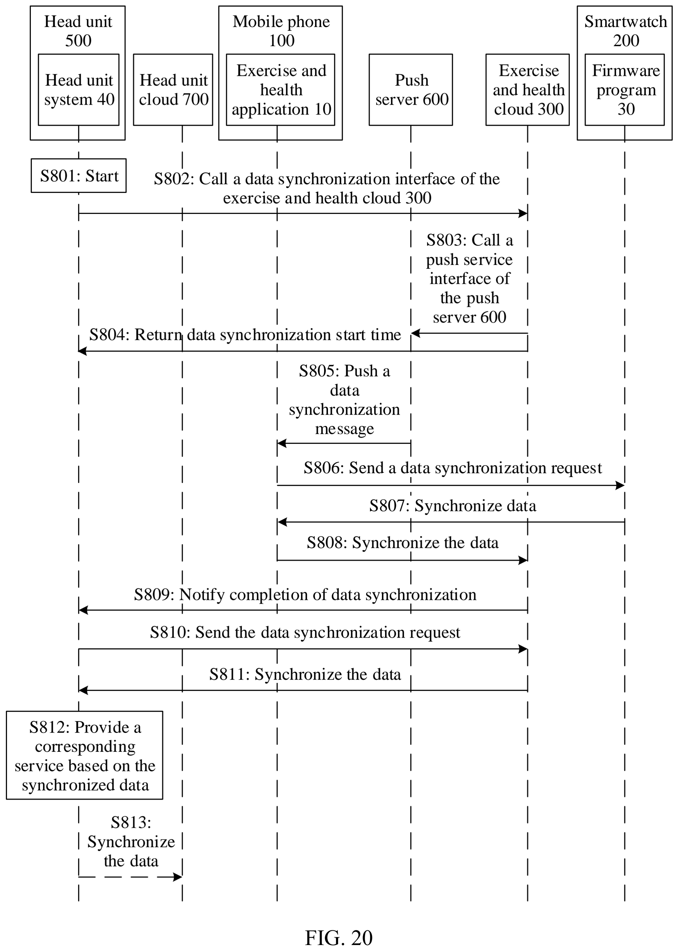

FIG. 20 is a flowchart 6 of an example of a data synchronization method according to an embodiment of this application.

As shown in FIG. 20, the data synchronization method includes the following steps.

S801: Start a head unit system 40 of a head unit 500.

S802: The head unit system 40 of the head unit 500 calls a data synchronization interface of the exercise and health cloud 300.

S803: The exercise and health cloud 300 calls a push service interface of the push server 600.

S804: The exercise and health cloud 300 returns data synchronization start time to the head unit system of the head unit 500.

S805: The push server 600 pushes a data synchronization message to the exercise and health application 10 on the mobile phone 100.

S806: The exercise and health application 10 on the mobile phone 100 sends a data synchronization request to the firmware program 30 of the smartwatch 200.

S807: The firmware program 30 of the smartwatch 200 synchronizes data to the exercise and health application 10 on the mobile phone 100.

Step S801 to step S807 are substantially the same as step S701 to step S707. Details are not described herein again.

S808: The exercise and health application 10 on the mobile phone 100 synchronizes the data to the exercise and health cloud 300.

After receiving the data synchronized by the firmware program 30 of the smartwatch 200, the exercise and health application 10 on the mobile phone 100 synchronizes the data to the exercise and health cloud 300.

S809: The exercise and health cloud 300 notifies the head unit system 40 of the head unit 500 that data synchronization has been completed.

In an embodiment of this application, the user subscribes to a message of the exercise and health cloud 300 on the head unit system 40 of the head unit 500 in advance. After receiving the data synchronized by the exercise and health application 10 on the mobile phone 100, the exercise and health cloud 300 may send a data synchronization completion message to the head unit system 40, to notify the head unit system 40 of the head unit 500 that data synchronization has been completed.

S810: The head unit system 40 of the head unit 500 sends a data synchronization request to the exercise and health cloud 300.

After receiving the data synchronization completion message of the exercise and health cloud 300, the head unit system 40 of the head unit 500 may send the data synchronization request to the exercise and health cloud 300, to request the exercise and health cloud 300 to synchronize the data of the smartwatch 200 to the head unit system 40.

S811: The exercise and health cloud 300 synchronizes the data to the head unit system 40 of the head unit 500.

S812: The head unit system 40 of the head unit 500 provides a corresponding service based on the synchronized data.

S813: The head unit system 40 of the head unit 500 synchronizes the data to a head unit cloud 700.

Step S811 to step S813 are substantially the same as step S715 to step S717. Details are not described herein again.

In an embodiment of this application, when the user subscribes to the message of the exercise and health cloud on the head unit system, in a process of synchronizing the data of the smartwatch to the head unit system, the head unit system does not need to perform a process of determining whether data synchronization has been completed, thereby simplifying a data synchronization procedure.

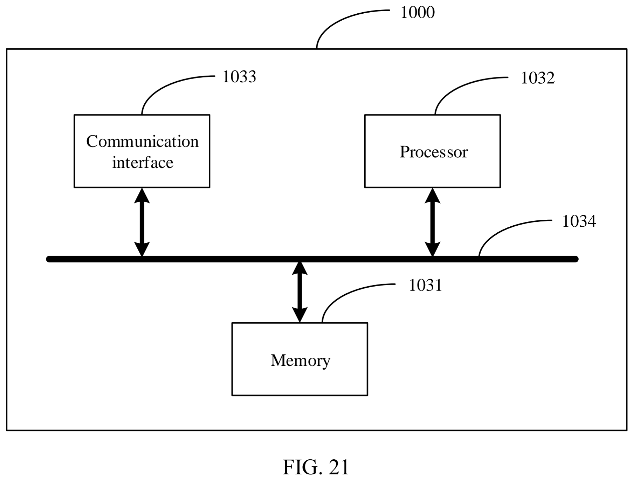

FIG. 21 is a diagram of a structure of an electronic device 1000. The electronic device 1000 may be a terminal device such as the mobile phone or the head unit mentioned in this application, or may be a wearable device such as the smartwatch mentioned in this application, or may be the push server mentioned in this application. As shown in FIG. 21, the electronic device 1000 includes one or more processors 1032, a communication interface 1033, a memory 1031, a bus system 1034, and one or more programs. The communication interface 1033, the processor 1032, and the memory 1031 are connected to each other by the bus system 1034. The bus system 1034 may be a peripheral component interconnect bus, an extended industry standard architecture bus, or the like. The bus may be classified into an address bus, a data bus, a control bus, and the like. For ease of representation, only one bold line is used to represent the bus in the figure, but this does not mean that there is only one bus or only one type of bus. The one or more programs are stored in the memory 1031. The one or more programs include instructions. When the instructions are executed by the electronic device 1000, the electronic device 1000 is enabled to perform the related method in any one of FIG. 6, FIG. 9, FIG. 14A, FIG. 14B, FIG. 15, FIG. 17, FIG. 19A and FIG. 19B, and FIG. 20.

This application further provides a computer storage medium storing one or more programs. The one or more programs include instructions. When the instructions are executed by the electronic device 1000, the electronic device 1000 is enabled to perform the related method in any one of FIG. 6, FIG. 9, FIG. 14A, FIG. 14B, FIG. 15, FIG. 17, FIG. 19A and FIG. 19B, and FIG. 20.

This application further provides a computer program product including instructions. When the computer program product runs on the electronic device 1000, the electronic device 1000 is enabled to perform the related method in any one of FIG. 6, FIG. 9, FIG. 14A, FIG. 14B, FIG. 15, FIG. 17, FIG. 19A and FIG. 19B, and FIG. 20.

The electronic device, the computer storage medium, or the computer program product provided in this application is configured to perform the corresponding method provided above. Therefore, for beneficial effects that can be achieved by the electronic device, the computer storage medium, or the computer program product, refer to the beneficial effects in the corresponding method provided above. Details are not described herein again.

It should be understood that sequence numbers of the foregoing processes do not mean an execution sequence in various embodiments of this application. The execution sequence of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, device, and method may be implemented in other manners. For example, the described device embodiment is merely an example. For example, division into the units is merely logical function division and may be other division during actual implementation. For example, a plurality of units or components may be combined or integrated into another system, or some features may be omitted or not performed. In addition, the displayed or discussed mutual couplings or direct couplings or communication connections may be implemented through some interfaces. The indirect couplings or communication connections between the devices or units may be implemented in an electronic, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

All or some of the foregoing embodiments may be implemented by using software, hardware, firmware, or any combination thereof. When implemented by using a software program, all or some of the embodiments may be implemented in a form of a computer program product. The computer program product includes one or more computer instructions. When the computer program instructions are loaded and executed on a computer, all or some of the procedure or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, database server, or data center to another website, computer, database server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a database server or a data center, integrating one or more usable media. The usable medium may be a magnetic medium (for example, a floppy disk, a hard disk, or a magnetic tape), an optical medium, a semiconductor medium (for example, a solid-state drive (solid-state drive, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data synchronization method, wherein the method comprises:
receiving, by a first application of a first electronic device, a first instruction, wherein the first instruction indicates synchronization of first data of a second electronic device to the first application of the first electronic device;
starting, by the first application of the first electronic device, a second application of the first electronic device; and
obtaining, by the second application of the first electronic device, the first data from the second electronic device, and synchronizing the first data to the first application of the first electronic device, wherein
the first application does not have data access permission of the second electronic device, and the second application has the data access permission of the second electronic device.

2. The method according to claim 1, wherein starting, by the first application of the first electronic device, the second application of the first electronic device comprises:
opening, by the first application, a first interface of the second application based on a first link in the first application, wherein the first link is a link for opening the first interface of the second application.

3. The method according to claim 1, wherein starting, by the first application of the first electronic device, the second application of the first electronic device further comprises:
sending, by the first application, a second instruction to the second application, wherein the second instruction indicates the second application to start.

4. The method according to claim 1, wherein starting, by the first application of the first electronic device, the second application of the first electronic device further comprises:
pushing, by the first application of the first electronic device, a first message to the second application of the first electronic device through a push server, wherein the first message is for notifying the second application to start.

5. The method according to claim 4, wherein pushing, by the first application of the first electronic device, the first message to the second application of the first electronic device through the push server comprises:
sending, by the first application of the first electronic device, a first request to the push server through a first application server, wherein the first request is for requesting the push server to push the first message to the second application of the first electronic device, wherein
the first application server is associated with the first application of the first electronic device.

6. The method according to any one of claims 1 to 4, wherein obtaining, by the second application of the first electronic device, the first data from the second electronic device, and synchronizing the first data to the first application of the first electronic device comprise:
sending, by the second application of the first electronic device, a second request to a firmware program of the second electronic device, wherein the second request is for requesting the firmware program of the second electronic device to synchronize the first data of the second electronic device to the second application of the first electronic device; and
receiving, by the second application of the first electronic device, the first data synchronized by the firmware program of the second electronic device, and synchronizing the first data to the first application of the first electronic device.

7. The method according to any one of claims 1 to 4, wherein obtaining, by the second application of the first electronic device, the first data from the second electronic device, and synchronizing the first data to the first application of the first electronic device further comprise:
sending, by the second application of the first electronic device, a second request to a firmware program of the second electronic device, wherein the second request is for requesting the firmware program of the second electronic device to synchronize the first data of the second electronic device to the second application of the first electronic device; and
receiving, by the second application of the first electronic device, the first data synchronized by the firmware program of the second electronic device, synchronizing the first data to a second application server, and synchronizing, by the second application server, the first data to the first application of the first electronic device, wherein
the second application server is associated with the second application of the first electronic device.

8. The method according to claim 7, wherein the second application is further installable on a third electronic device, and the method further comprises:
synchronizing, by the first electronic device, the first data to the second application on the third electronic device through the second application server when an account that is the same as that of the second application on the first electronic device is used to log in to the second application on the third electronic device.

9. A data synchronization method, wherein the method comprises:
starting a second application of a first electronic device based on a received second message, wherein the second message is pushed to the first electronic device by a push server notified by a second application server requested by a fourth electronic device, and the second application server is associated with the second application of the first electronic device; and
obtaining, by the second application of the first electronic device, first data from a second electronic device, and synchronizing the first data to the fourth electronic device.

10. The method according to claim 9, wherein obtaining, by the second application of the first electronic device, the first data from the second electronic device, and synchronizing the first data to the fourth electronic device comprise:
sending, by the second application of the first electronic device, a second request to a firmware program of the second electronic device, wherein the second request is for requesting the firmware program of the second electronic device to synchronize the first data of the second electronic device to the second application of the first electronic device; and
synchronizing, by the second application of the first electronic device, the first data of the second electronic device to the fourth electronic device through the second application server.

11. The method according to claim 10, wherein sending, by the second application of the first electronic device, the second request to the firmware program of the second electronic device comprises:
displaying, by the second application of the first electronic device, a first component on a display of the first electronic device, wherein the first component comprises prompt information for prompting synchronization of the first data of the second electronic device to the fourth electronic device;
receiving, by the second application of the first electronic device, a first operation for the first component, wherein the first operation is for synchronizing the first data of the second electronic device to the fourth electronic device; and
sending, by the second application of the first electronic device, the second request to the firmware program of the second electronic device in response to the first operation.

12. The method according to claim 10, wherein synchronizing, by the second application of the first electronic device, the first data of the second electronic device to the fourth electronic device through the second application server comprises:
synchronizing, by the second application of the first electronic device, the first data of the second electronic device to the second application server;
receiving, by the second application server, a third request sent by the fourth electronic device; and
synchronizing, by the second application server, the first data of the second electronic device to the fourth electronic device in response to the third request.

13. The method according to claim 12, wherein receiving, by the second application server, the third request sent by the fourth electronic device comprises:
obtaining, by the fourth electronic device, data synchronization start time of the first data and latest data synchronization completion time of the second application server; and
sending, by the fourth electronic device, the third request to the second application server based on determining that the data synchronization completion time is greater than the data synchronization start time, for the second application server to receive the third request.

14. The method according to claim 12, wherein receiving, by the second application server, the third request sent by the fourth electronic device comprises:
receiving, by the second application server, the first data that is of the second electronic device and that is synchronized by the second application of the first electronic device, and sending a third message to the fourth electronic device; and
sending, by the fourth electronic device, the third request to the second application in response to the third message, for the second application server to receive the third request.

15. An electronic device, comprising:
a memory, configured to store instructions for execution by one or more processors of the electronic device; and
the processor, wherein when the processor executes the instructions in the memory, the electronic device is enabled to perform the data synchronization method performed by the first electronic device according to any one of claims 1 to 8 or claims 9 to 14.

16. A chip, wherein the system on chip comprises a processing circuit and a storage medium, the storage medium stores computer program code, and when the computer program code is executed by the processing circuit, the method according to any one of claims 1 to 8 or claims 9 to 14 is implemented.

17. A computer-readable storage medium, wherein the computer-readable storage medium stores instructions, and when the instructions are executed on a computer, the computer is enabled to perform the data synchronization method according to any one of claims 1 to 8 or claims 9 to 14.
